# EUROPÄISCHE PATENTSCHRIFT

(11) **EP 1 876 080 B1**
(45) Veröffentlichungstag und Bekanntmachung des Hinweises auf die Patenterteilung: **12.12.2012**
(21) Anmeldenummer: 07012652.9
(22) Anmeldetag: 28.06.2007
(51) Int. Cl.: B60W 20/00, B60K 6/445, B60W 10/06

(54) **Antriebssystem für ein Flurförderzeug mit einer Brennkraftmaschine**
Drive system for an industrial truck with a combustion engine
Système d'entraînement pour un chariot de manutention doté d'un moteur à combustion interne

(30) Priorität: 05.07.2006 DE 102006030945
(43) Veröffentlichungstag der Anmeldung: 09.01.2008
(73) Patentinhaber: Jungheinrich Aktiengesellschaft, 22047 Hamburg (DE)
(72) Erfinder: Rogg, Andreas, Dipl.-Ing., 23554 Lübeck (DE)
(74) Vertreter: Hauck Patent- und Rechtsanwälte

(56) Entgegenhaltungen:
- DE-A1- 10 340 472

## Beschreibung

Die Erfindung bezieht sich auf ein Antriebssystem für ein Flurförderzeug mit einer Brennkraftmaschine als primärer Energiequelle nach Patentanspruch 1.

Hybridantriebe für Kraftfahrzeuge sind seit längerem bekannt. In US 3,566,717 wird ein Antriebssystem für Kraftfahrzeuge beschrieben, bei dem die Welle der Brennkraftmaschine mit der ersten Welle eines 3-Wellen-Umlaufgetriebes gekoppelt ist. Ein erster Elektromotor ist mit der zweiten Welle des 3-Wellen-Umlaufgetriebes gekoppelt. Die dritte Welle ist mit einem zweiten Elektromotor und mit den Rädern des Fahrzeugs gekoppelt. Die Leistungsübertragung erfolgt als Leistungsverzweigung zum Teil auf mechanischem Weg über die dritte Welle des Umlaufgetriebes und zum restlichen Teil auf elektrischem Wege vom ersten zum zweiten Elektromotor. Das Übersetzungsverhältnis, das von der Brennkraftmaschine auf die Räder des Fahrzeugs wirkt, wird durch das Drehzahlverhältnis von Brennkraftmaschine und erstem Elektromotor eingestellt. Die bekannte Anordnung ist als stufenloses Getriebe einsetzbar, jedoch aufgrund der internen Leistungsflüsse nur für eine Fahrtrichtung geeignet.

Aus DE 101 41 923 ist ein Antriebssystem für Kraftfahrzeuge bekannt geworden, bei dem die Welle der Brennkraftmaschine mit der ersten Welle eines 3-Wellen-Umlaufgetriebes gekoppelt ist. Ein erster Elektromotor ist mit der zweiten Welle des Umlaufgetriebes verbunden und die dritte Welle ist mit einem zweiten Elektromotor und den Rädern des Fahrzeugs gekoppelt. Zum Rückwärtsfahren wird die Verbindung der dritten Welle des Umlaufgetriebes mit dem zweiten Elektromotor und den Rädern des Fahrzeugs über eine Schaltkupplung getrennt, sowie die Welle der Brennkraftmaschine und die Welle des ersten Elektromotors mit Hilfe einer Schaltkupplung verbunden, so daß seriell eine elektrische Leistungsübertragung vom generatorisch arbeitenden ersten Elektromotor zum zweiten Elektromotor möglich ist. Zur Umschaltung zwischen leistungsverzweigtem und seriellem Betrieb ist unumgänglich, die von der Brennkraftmaschine auf die Räder übertragene Leistung bis auf Null zu reduzieren.

Aus DE 103 40 472 ist ein Antriebssystem für Flurförderzeuge gemäß dem Oberbegriff des Anspruchs 1 gekannt geworden, bei dem die Welle der Brennkraftmaschine mit der Welle eines 3-Wellen-Umlaufgetriebes gekoppelt ist. Ein erster Elektromotor ist mit der zweiten Welle des Umlaufgetriebes verbunden, und eine dritte Welle ist mit einem Umschaltgetriebe verbunden, dessen Ausgangswelle mit einem Summiergetriebe verbunden ist. Ein zweiter Elektromotor ist mit der anderen Eingangswelle des Summiergetriebes verbunden, dessen Abtrieb auf die Räder wirkt. Eine Überbrückungskupplung am 3-Wellen-Umlaufgetriebe ermöglicht einen seriellen elektrischen Betrieb, in dem von der Brennkraftmaschine erzeugte Leistung von dem ersten Elektromotor in elektrischen Strom umgewandelt wird, der dem zweiten Elektromotor als Fahrstrom zugeführt wird. Hierzu wird das Umschaltgetriebe in Neutralstellung geschaltet. In dem seriellen Betrieb ist Vorwärts- und Rückwärtsfahren möglich. Weiterhin ist im leistungsverzweigten Betrieb Vor- und Rückwärtsfahren möglich, indem das Umschaltgetriebe in die zur jeweiligen Fahrtrichtung gehörende Schaltstufe geschaltet wird. Zur Umschaltung zwischen leistungsverzweigtem und seriellem Betrieb ist bei Verwendung einer der Überbrückungskupplung zugeordneten Übersetzungsstufe möglich, in einer drehzahlsynchronen Lastschaltung die von der Brennkraftmaschine auf die Räder übertragende Leistung konstant zu halten.

Üblicherweise werden die Kupplungen als hydraulisch betätigte Lamellenkupplungen ausgeführt. Bekanntlich weisen hydraulisch betätigte Kupplungen zumeist mitrotierende Kolben auf, so daß das zur Betätigung benötigte Druckmedium auf drehende Teile übertragen werden muß, was konstruktiv aufwendig und wartungsanfällig ist.

Der Erfindung liegt die Aufgabe zugrunde, ein hybrides Antriebssystem für Flurförderzeug zu schaffen, das konstruktiv wenig aufwendig und außerdem wenig wartungsanfällig ist.

Diese Aufgabe wird durch die Merkmale des Patentanspruchs 1 gelöst.

Bei dem erfindungsgemäßen Antriebssystem ist entweder ein 4-Wellen-Zweisteg-Umlaufgetriebe oder ein Einsteg-Umlaufgetriebe vorgesehen. Eine erste Welle ist mit der Brennkraftmaschine gekoppelt und eine zweite mechanisch mit einem ersten Elektromotor. Elektrisch ist der Elektromotor mit dem Bordnetz des Flurförderzeugs verbunden. Mit einer dritten Welle des Umlaufgetriebes ist eine Bremse gekoppelt, während eine vierte Welle mit einem Umschaltgetriebe gekoppelt ist. Das Umschaltgetriebe ist mit einem Summiergetriebe gekoppelt, dessen andere Eingangswelle mit einem mit dem Bordnetz verbundenen zweiten Elektromotor verbunden ist. Dessen Abtriebswelle ist mit einem angetriebenen Rad des Flurförderzeugs gekoppelt. Eine Sensorvorrichtung ermittelt die Drehzahl der Brennkraftmaschine und des ersten und zweiten Elektromotors. Eine Steuer- und Regelvorrichtung stellt nach Maßgabe von Sollwert-Signalen und der Ausgangssignale der Sensorvorrichtung die Drehzahlen und/oder Drehmoment der Elektromotoren und der Brennkraftmaschine ein. Ferner wird der Motor- und Generatorbetrieb der Elektromotoren und die Betätigung von Umschaltgetriebe und Bremse gesteuert.

Wird bei dem erfindungsgemäßen Antriebssystem die Bremse nicht betätigt, arbeitet das 4-Wellen-Umlaufgetriebe als Überlagerungsgetriebe. Bei Aktivierung der Bremse wird das Umlaufgetriebe in ein zwangsläufiges Getriebe mit festem Übersetzungsverhältnis zwischen den einzelnen Wellen überführt. Das erfindungsgemäße Antriebssystem ermöglicht sowohl einen seriell elektrischen als auch einen elektrisch leistungsverzweigten Betrieb. In Verbindung mit einem elektrischen Energiespeicher ist zudem ein emissionsfreier rein elektrischer Betrieb möglich.

Es versteht sich, daß das angetriebene Rad und die Brennkraftmaschine bezüglich ihrer Position zur Getriebeanordnung vertauscht werden können.

Die Erfindung ermöglicht eine stufenlose Verstellung der Übersetzung, eine gute Regelbarkeit und einen guten Wirkungsgrad. Neben dem Fahrantrieb werden auch Arbeitsfunktionen des Flurförderzeugs erfüllt, wobei neben dem Betrieb einer Brennkraftmaschine als primärer Energiequelle auch mindestens zeitweise ein emissionsfreier Betrieb ermöglicht ist, um Hallen oder Container zu befahren. Schließlich werden mit dem Antriebssystem hohe Beschleunigungen, Steigfähigkeit und große Fahrgeschwindigkeiten erreicht sowohl in Vorwärts- als auch Rückwärtsfahrtrichtung.

Das Umschaltgetriebe kann ein Wendegetriebe sein. Der zweite Elektromotor kann von zwei parallel geschalteten Elektromotoren gebildet sein, wobei jeweils ein Elektromotor mit einem angetriebenen Rad gekoppelt ist.

Nach einer Ausgestaltung der Erfindung kann der Verbraucher für eine Zusatzfunktion des Flurförderzeugs eine Hydropumpe sein. Zu Bremszwecken kann nach einer weiteren Ausgestaltung der Erfindung der Hydropumpe eine steuerbare Drossel zugeordnet sein.

Es sind verschiedene Schaltungsanordnungen für die zwei Einzelwellen und die zwei Koppelwellen des 4-Wellen-Zweisteg-Getriebes denkbar. Eine sieht nach einer Ausgestaltung der Erfindung vor, daß die erste Koppelwelle durch die Stegwellen der beiden Planetengetriebe und die zweite Koppelwelle durch die Sonnenradwelle des einen und die Hohlradwelle des anderen Planetengetriebes gebildet wird. Bei einer anderen Ausgestaltung der Erfindung ist vorgesehen, daß die erste Koppelwelle durch die Hohlradwelle der beiden Planetengetriebe und die zweite Koppelwelle durch die Sonnenradwelle des einen und die Stegwelle des anderen Planetengetriebes gebildet wird.

Bei einer anderen Ausgestaltung der Erfindung ist die erste Koppelwelle durch die Stegwellen der beiden Planetengetriebe und die zweite Koppelwelle durch die Sonnenradwellen der beiden Planetengetriebe gebildet. In einer anderen Ausgestaltung der Erfindung ist die erste Koppelwelle durch die Stegwelle des einen und die Sonnenradwelle des anderen Planetengetriebes und die zweite Koppelwelle durch die Sonnenradwelle des einen und die Stegwelle des anderen Planetengetriebes gebildet.

Nach einer anderen Ausgestaltung der Erfindung können die Bremse und die Brennkraftmaschine an einer Koppelwelle angeordnet sein, wobei der erste Elektromotor sowie das Umschaltgetriebe an den beiden Einzelwellen angeschlossen sein können. Alternativ können Bremse und Brennkraftmaschine an den beiden Einzelwellen angeschlossen sein.

In einer anderen Ausgestaltung der Erfindung können die Planeten einer Stufe eines 4-Wellen-Zweisteg-Umlaufgetriebes als Stufenplaneten ausgeführt sein. Statt Hohlräder können Sonnenräder vorgesehen werden.

Bei Verwendung eines 4-Wellen-Einsteg-Umlaufgetriebes können dreistufige Stufenplaneten vorgesehen sein, wobei die Stufen der Planeten jeweils mit einem Sonnen- oder Hohlrad in Eingriff stehen und der Steg sowie die drei mit dem Planeten kämmenden Zahnräder jeweils mit einer Anschlußwelle verbunden sind. Alternativ dazu kann vorgesehen werden, daß der Steg mit zweistufigen Stufenplaneten versehen ist, wobei ein Sonnen- und ein Hohlrad mit den Planeten der einen Stufe sowie ein Sonnen- oder Hohlrad mit den Planeten der anderen Stufe in Eingriff stehen und der Steg sowie die drei mit dem Planeten kämmenden Zahnräder jeweils mit einer Anschlußwelle verbunden sind.

Nach einer weiteren Ausgestaltung der Erfindung kann der erste Elektromotor als Hohlwellenmotor ausgeführt sein und konzentrisch um die eine Anschlußwelle des 4-Wellen-Umlaufgetriebes angeordnet werden. Auch der zweite Elektromotor kann als Hohlwellenmotor ausgeführt sein und konzentrisch um die Abtriebswelle des Umschaltgetriebes angeordnet werden. Das Summiergetriebe kann ggf. durch eine direkte Anflanschung des Hohlwellenmotors an die Abtriebswelle des Umschaltgetriebes ersetzt werden.

Nach einer weiteren Ausgestaltung der Erfindung kann das Umschalt- bzw. Wendegetriebe als 4-Wellen-Zweisteg-Getriebe mit zwei Einzelwellen und zwei Koppelwellen ausgeführt und konzentrisch zu dem ersten 4-Wellen-Umlaufgetriebe angeordnet sein. Die erste Welle des Umschalt- oder Wendegetriebes ist mit der Abtriebswelle des ersten 4-Wellen-Umlaufgetriebes verbindbar, wobei die zweite und die dritte Welle des Umschalt- bzw. Wendegetriebes mit einer Bremse gekoppelt ist. Die vierte Welle des Umschalt- bzw. Wendegetriebes ist mit mindestens einem angetriebenen Rad des Flurförderzeugs gekoppelt. Nach einer anderen Ausgestaltung der Erfindung ist das Umschalt- und Wendegetriebe als 3-Wellen-Umlaufgetriebe ausgeführt, wobei die erste Welle des Umschalt- und Wendegetriebes mit der Abtriebswelle des 4-Wellen-Umlaufgetriebes verbindbar ist, wobei ferner die zweite Welle des Umschalt- und Wendegetriebes mit mindestens einem angetriebenen Rad des Flurförderzeugs gekoppelt ist, wobei die dritte Welle des Umschalt- bzw. Wendegetriebes mittels einer Bremse festsetzbar ist und wobei zwei Wellen des Umschalt- bzw. Wendegetriebes mittels einer Kupplung miteinander verbindbar sind. Alternativ kann das Umschalt- bzw. Wendegetriebe auch als Vorlegegetriebe ausgeführt sein, wobei die Eingangswelle mit der Abtriebswelle des 4-Wellen-Umlaufgetriebes verbindbar ist und die Abtriebswelle des Umschalt- bzw. Wendegetriebes mit mindestens einem angetriebenen Rad des Flurförderzeugs gekoppelt ist.

Bei dem erfindungsgemäßen Antriebssystem sind ein serieller Betrieb mit Stromerzeugung, ein leistungsverzweigter Betrieb, ein mechanischer Betrieb, eine synchrone Lastschaltung sowie eine Umschaltung möglich. Es ermöglicht auch einen verbrennungsmotorischen Betrieb der Zusatzfunktion sowie eine elektromotorische Versorgung der Zusatzfunktion. Das erfindungsgemäße Antriebssystem ermöglicht auch die Energierückgewinnung beim Absenken eines Lasttragmittels (Nutzsenken) sowie ein elektromotorisches Fahren ohne Emission.

Die Erfindung soll nachfolgend anhand von in Zeichnungen dargestellten Ausführungsbeispielen näher erläutert werden.
- Fig. 1: zeigt schematisch ein Antriebssystem für ein Flurförderzeug nach der Erfindung mit einem 4-Wellen-Umlaufgetriebe.
- Fig. 2: zeigt schematisch ein 4-Wellen-Zweisteg-Umlaufgetriebe und ein Wendegetriebe als 3-Wellen-Umlaufgetriebe.
- Fig. 3: zeigt ein 4-Wellen-Zweisteg-Umlaufgetriebe und ein Wendegetriebe als 4-Wellen-Umlaufgetriebe.
- Fig. 4: zeigt ein 4-Wellen-Einsteg-Umlaufgetriebe und ein Wendegetriebe als 4-Wellen-Umlaufgetriebe.
- Fig. 5: zeigt ein 4-Wellen-Zweisteg-Umlaufgetriebe und ein Wendegetriebe als 4-Wellen-Umlaufgetriebe.
- Fig. 6: zeigt ein 4-Wellen-Zweisteg-Umlaufgetriebe und ein Wendegetriebe als 4-Wellen-Umlaufgetriebe.
- Fig. 7: zeigt ein 4-Wellen-Einsteg-Umlaufgetriebe und ein Wendegetriebe als Vorlegegetriebe.
- Fig. 8: zeigt ein Antriebssystem nach der Erfindung als Baueinheit mit Hohlwellen-Elektromotoren.
- Fig. 9: zeigt ein Antriebssystem nach der Erfindung als Baueinheit mit seitlich angeordneten Elektromotoren und abtriebsseitiger Hydropumpe.

Eine Verbrennungskraftmaschine VKM ist mit einer ersten Welle eines 4-Wellen-Umlaufgetriebes 10 gekoppelt. Ein erster Elektromotor EM 1 ist mit einer zweiten Welle des Umlaufgetriebes 10 gekoppelt. Mit einer weiteren Welle des Umlaufgetriebes 10 ist ein Wendegetriebe 12 gekoppelt, das eine Vorwärts- und Rückwärtsstellung sowie eine Neutralstellung aufweist. Eine vierte Welle des Umlaufgetriebes 10 ist mit einer Bremse 14 gekoppelt. Der Elektromotor EM1 ist mit einer eine Batterie enthaltenden Leistungselektronik 16 elektrisch verbunden, die Bestandteil eines Bordnetzes ist. Diese ist mit einem zweiten Elektromotor EM2 elektrisch verbunden. Die Welle des zweiten Elektromotor EM2 ist eine Eingangswelle eines Summiergetriebes 18, deren zweite Eingangswelle die Ausgangswelle des Wendegetriebes 12 ist. Die Abtriebswelle des Summiergetriebes 18 ist über ein Differentialgetriebe 20 mit den Antriebswellen von zwei angetriebenen Rädern 22, 24 gekoppelt. Eine erste Hydropumpe P 1 ist von der Welle des Elektromotors EM2 angetrieben, und eine zweite Hydropumpe P2 ist von der Welle des zweiten Elektromotors EM2 angetrieben. Eine dritte Hydropumpe P3 ist von der Abtriebswelle der Brennkraftmaschine VKM angetrieben.

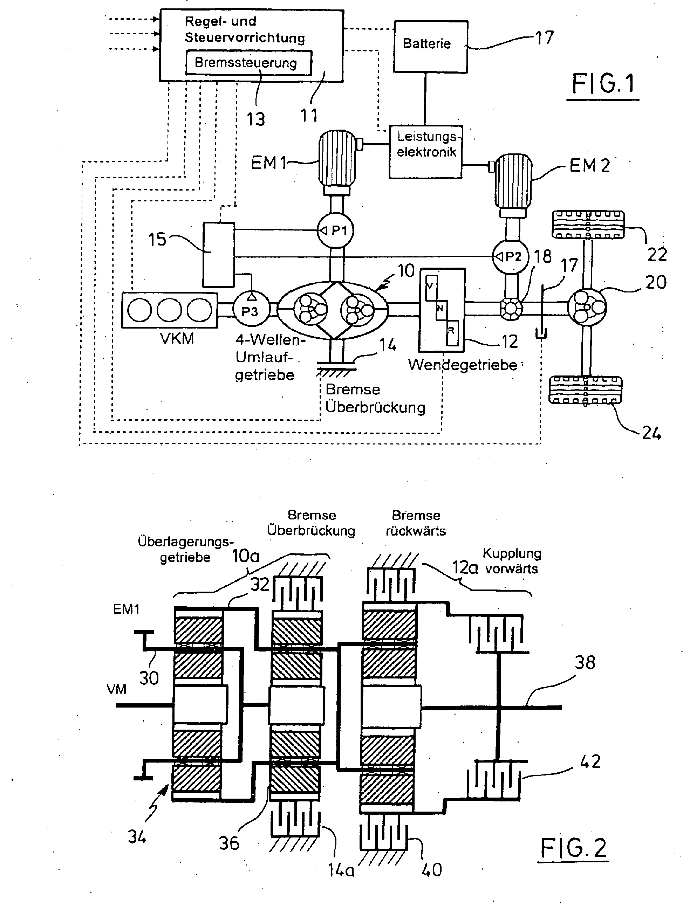

Dem Antriebssystem nach Fig. 1 ist eine Sensorvorrichtung zugeordnet, welche die Drehzahlen der Verbrennungskraftmaschine VKM und der Elektromotoren EM1 und EM2 erfaßt sowie auch die Temperaturen der Brennkraftmaschine VKM und der Elektromotoren EM1 und EM2, des nicht gezeigten elektrischen Speichers und des hydraulischen Mediums für die Getriebe. Diese Sensorvorrichtung ist nicht gezeigt. Gezeigt ist eine Steuer- und Regelvorrichtung 11, welche nach Maßgabe von Sollwert-Signalen der vom Bediener des Flurförderzeugs betätigten Sollwertgeber und unter Zugrundelegung der Ausgangssignale der Sensorvorrichtung die Drehzahlen und/oder Drehmomente der Brennkraftmaschine VKM und der Elektromotoren EM1 und EM2 steuert oder regelt, den Motor- oder Generatorbetrieb der Elektromotoren EM1 und EM2 schaltet sowie die Betätigung des Umschaltgetriebes 10 und der Bremse 14 steuert. Sie enthält auch eine Bremssteuerung 13. Nachstehend werden einige typische Betriebsarten des Flurförderzeugs anhand des Antriebssystems nach Fig. 1 beschrieben.

Durch Betätigung der Bremse 14 am 4-Wellen-Umlaufgetriebe und Trennen des Umschaltgetriebes 10, d.h. Schaltung in die Neutralstellung, wird die Leistung der Brennkraftmaschine VKM auf den ersten Elektromotor EM 1 übertragen, der somit als Generator arbeitet. Der auf diese Weise erzeugte Strom kann zum Beladen der Batterie (nicht gezeigt), für die elektrischen Verbraucher des Fahrzeugs (nicht gezeigt), für elektrische externe Verbraucher (nicht gezeigt) sowie als Fahrstrom für den zweiten Elektromotor EM2 verbraucht werden. Die Übersetzung des Umlaufgetriebes 10 ergibt sich aus den Zähnezahlen der Zahnräder des 4-Wellen-Umlaufgetriebes.

Ein leistungsverzweigter Betrieb ergibt sich, wenn die Bremse 14 geöffnet ist und das Wendegetriebe 12 in die zur jeweiligen Fahrtrichtung gehörende Schaltstellung geschaltet ist. Die Leistung der Brennkraftmaschine VKM wird zum Teil mechanisch von der mit dem Wendegetriebe 12 gekoppelten Welle des Umlaufgetriebes 10 auf das Summiergetriebe 18 übertragen und zum anderen Teil elektrisch von einem Elektromotor EM1 über die Leistungselektronik 16 auf den anderen Elektromotor EM2 und von diesem zu dem Summiergetriebe 18 übertragen.

Bei hoher Zugkraft und niedriger Fahrgeschwindigkeit wird die Bremse 14 betätigt und das Wendegetriebe 12 befindet sich in der zur jeweiligen Fahrtrichtung gehörenden Schaltstellung. Die Leistung der Brennkraftmaschine VKM wird unmittelbar auf die Antriebsräder 22, 24 mechanisch übertragen, wobei beide Elektromotor EM 1 und EM2 mit einer vorgegebenen Übersetzung mit der Fahrgeschwindigkeit gekoppelt sind.

Ein Übergang von dem oben beschriebenen seriellen Betrieb zu dem ebenfalls beschriebenen leistungsverzweigten Betrieb erfolgt, indem die Bremse 14 betätigt bleibt, das Wendegetriebe 12 im Punkt synchroner Drehzahl von An- und Abtrieb in die zur jeweiligen Fahrtrichtung gehörende Schaltstellung geschaltet und die Leistung der Elektromotoren EM1 und EM2 auf den Lastzustand im leistungsverzweigten Betrieb geregelt wird. Danach wird die Bremse 14 gelöst.

Der Übergang von dem seriellen Betrieb zum leistungsverzweigten Betrieb erfolgt, indem der zweite Elektromotor EM2 derart geregelt wird, daß er das Abtriebsdrehmoment vollständig aufbringt, wobei der Fahrstrom aus dem elektrischen Speicher (Batterie) entnommen wird. Dann wird die Bremse 14 gelöst und die Drehzahl der Brennkraftmaschine VKM und des ersten Elektromotors EM2 derart geregelt, daß das Wendegetriebe 12 den Punkt synchroner Drehzahl von An- und Abtrieb erreicht, wonach in die zur jeweiligen Fahrtrichtung gehörende Schaltstellung geschaltet wird. Die Brennkraftmaschine VKM und die beiden Elektromotoren EM1 und EM2 werden auf den Lastzustand im leistungsverzweigten Betrieb geregelt.

Die Hydropumpe P1 dient zum Beispiel für die Heben- und Senkenfunktion des Flurförderzeugs. Zur Einleitung dieser Funktion wird die Bremse 14 betätigt und das Wendegetriebe 12 in Neutralstellung geschaltet. Die Leistung der Brennkraftmaschine VKM wird auf den ersten Elektromotor EM 1 mechanisch gekoppelt, wobei die Hydropumpe P1 angetrieben wird. Ein elektromotorisches Heben und Senken erfolgt, indem die Leistung des ersten Elektromotors EM1 auf den Verbraucher (Hydropumpe P1) übertragen wird, der mit der Welle des ersten Elektromotors EM1 gekoppelt ist, wobei die elektrische Leistung dem elektrischen Speicher (Batterie) entnommen wird. Dabei ist die Bremse 14 geöffnet und das Wendegetriebe 12 getrennt (Neutralstellung). Die Brennkraftmaschine VKM kann abgeschaltet sein.

Zur Wiedergewinnung der Energie beim Senken des Lasttragmittels im Flurförderzeugs wird über die Hydropumpe P1 der Elektromotor EM1 angetrieben, der somit generatorisch Strom erzeugt, der der Batterie zugeführt wird. Dabei ist die Bremse 14 geöffnet und das Wendegetriebe 12 getrennt.

Beim elektromotorischen Fahren bringt der zweite Elektromotor EM2 vollständig das Abtriebsdrehmoment auf, wobei der Fahrstrom aus dem elektrischen Speicher entnommen wird. Das Wendegetriebe 12 ist getrennt und die Brennkraftmaschine VKM kann abgeschaltet sein.

Das in Fig. 1 gezeigte Antriebssystem eröffnet unterschiedliche Bremsmöglichkeiten. Zu diesem Zweck ist eine Bremssteuerung vorgesehen (nicht gezeigt). Im Falle einer geringen Bremskraft bleibt das Wendegetriebe 12 in der Neutralstellung bzw. wird in diese geschaltet, und der zweite Elektromotor EM2 wird derart angesteuert, daß das Bremsmoment alleine von diesem durch generatorisches Bremsen aufgebracht wird. Der generatorisch erzeugte Strom wird zum Laden des elektrischen Speichers (Batterie 17) verwendet.

Im Fall einer großen Sollbremskraft bleibt das Umschalt- und Wendegetriebe in der zur jeweiligen Fahrtrichtung/-geschwindigkeit gehörenden Schaltstellung bzw. wird in diese geschaltet. Der zweite Elektromotor EM2 wird derart gesteuert, daß das zulässige generatorische Bremsmoment aufgebracht und der generatorisch erzeugte Strom zum Laden des elektrischen Speichers benutzt wird. Die Brennkraftmaschine wird in den Schubbetrieb gesteuert (d.h. wird lediglich mitgeschleppt). Der erste Elektromotor EM 1 wird derart angesteuert, daß die Drehzahl der über das Umlaufgetriebe 10 angeschlossenen Brennkraftmaschine VKM vorgegebene Werte annimmt, und der generatorisch erzeugte Strom wird zum Laden des elektrischen Speichers benutzt.

Bei sehr großer Bremskraft wird das Wendegetriebe 12 in der Neutralstellung belassen oder in diese geschaltet, sobald eine vorgegebene Fahrgeschwindigkeit unterschritten wird. Der zweite Elektromotor EM2 wird derart gesteuert, daß das Bremsmoment allein von dem zweiten Elektromotor EM2 durch generatorisches Bremsen aufgebracht wird. Von der Bremssteuerung 11 wird die Bremse 14 betätigt. Außerdem wird der erste Elektromotor EM1 derart angesteuert, daß die an das Umlaufgetriebe 10 angeschlossene Brennkraftmaschine VKM beschleunigt wird, bis die Drehzahl der Brennkraftmaschine VKM bestimmte, vorgegebene Werte annimmt, wobei der vom zweiten Elektromotor EM2 generatorisch erzeugte Strom zumindest teilweise verbraucht wird.

Bei sehr großer Bremskraft wird eine z.B. der Hydropumpe P1 zugeordnete Drossel derart gesteuert, daß bei Überschreiten der vorgegebenen Werte für die Drehzahl der Brennkraftmaschine VKM ein zusätzliches Bremsmoment erzeugt wird. In Fig. 1 sind die Pumpen P1, P2 und P3 mit einem Ventilblock 15 verbunden, der zur Versorgung einer Mehrzahl von Verbrauchern dient sowie eine Drosselanordnung zu Bremszwecken enthält. Außerdem kann radseitig des Wendegetriebes 12 und des zweiten Elektromotors EM2 eine weitere Bremse angebaut sein. Eine radseitige Bremse 17 kann bei Überschreiten der vorgegebenen Werte für die Drehzahl der Brennkraftmaschine VKM ein zusätzliches Bremsmoment erzeugen.

Im folgenden werden einige konstruktive Ausführungen für das 4-Wellen-Umlaufgetriebe 10 und das Wendegetriebe 12 nach Fig. 1 erläutert. In Fig. 2 ist ein 4-Wellen-Zweisteg-Umlaufgetriebe 10a zu erkennen mit zwei Einzelwellen und zwei Koppelwellen, wobei die erste Koppelwelle 30 durch die Stegwellen des einen und die Sonnenradwelle des anderen Planetengetriebe 36 gebildet wird. Die zweite Koppelwelle 32 wird durch die Hohlradwelle des einen 34 und die Stegwelle des anderen Planetengetriebes 36 gebildet. Das Umlaufgetriebe ist ein Überlagerungsgetriebe, und die Bremse 14a ist mit dem Hohlrad des zweiten Planetengetriebe 36 gekoppelt. Das Wendegetriebe 12a ist ein 3-Wellen-Umlaufgetriebe, wobei die erste Welle mit der Abtriebswelle des 4-Wellen-Umlaufgetriebes 10a verbunden und eine zweite Welle mit mindestens einem angetriebenen Rad des Flurförderzeugs gekoppelt ist. Die Abtriebswelle ist mit 38 bezeichnet. Eine dritte Welle des Wendegetriebes 12a ist mit einer Bremse 40 versehen und kann somit festgesetzt werden. Zwei Wellen des Wendegetriebes 12a sind mittels einer Kupplung 42 miteinander verbindbar. Im gezeigten Fall sind es die Wellen 38 und die mit dem Hohlrad des Umlaufgetriebes verbundene Welle.

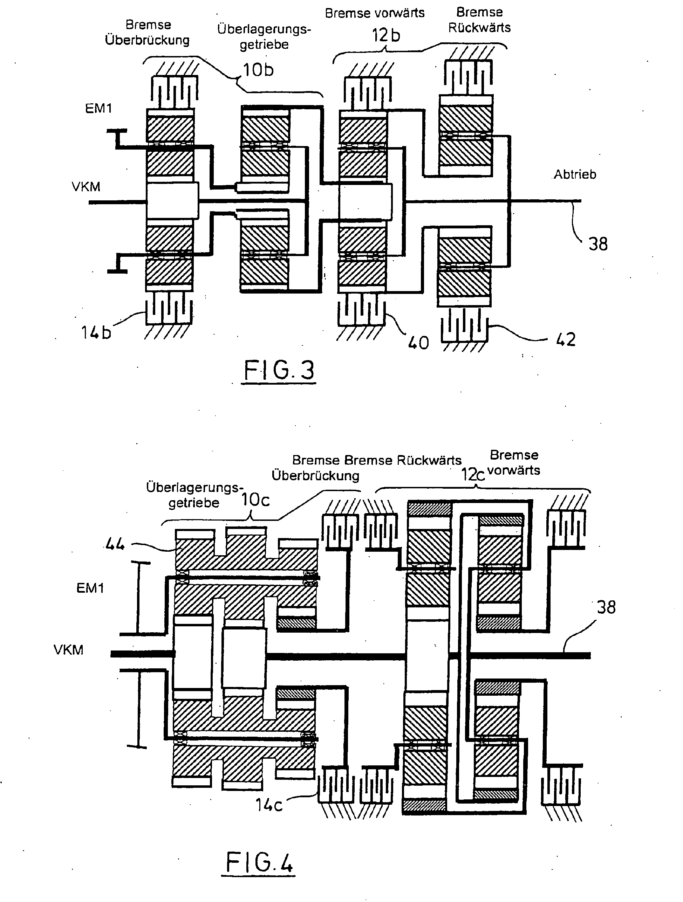

In Fig. 3 ist ein 4-Wellen-Zweisteg-Umlaufgetriebe 10b zu erkennen sowie das Wendegetriebe 12b als 4-Wellen-Umlaufgetriebe. Die erste Koppelwelle des Umlaufgetriebes 10b ist durch die Stegwelle des einen und die Sonnenradwelle des anderen Planetengetriebes gebildet und die zweite Koppelwelle ist durch die Sonnenradwelle des einen und die Stegwelle des anderen Planetengetriebes gebildet. Bei dem Wendegetriebe 12b ist eine Bremse 40 der einen Koppelwelle zugeordnet, die andere Koppelwelle ist mit dem Abtrieb 38 verbunden.

In Fig. 4 ist das Umlaufgetriebe 10c ein 4-Wellen-Einsteg-Umlaufgetriebe und das Wendegetriebe 12c ein 4-Wellen-Umlaufgetriebe 10e. Der Steg des Umlaufgetriebes 10c ist mit dreistufigen Stufenplaneten 44 versehen, wobei jede Stufe der Planeten jeweils mit einem Sonnen- oder Hohlrad in Eingriff stehen. Der Steg sowie die drei mit den Planeten 44 kämmenden Zahnräder sind jeweils mit einer Anschlußwelle verbunden. Die Bremse 14c ist mit dem der letzten Stufe der Stufenplaneten 44 gekoppelten Sonnenrad verbunden.

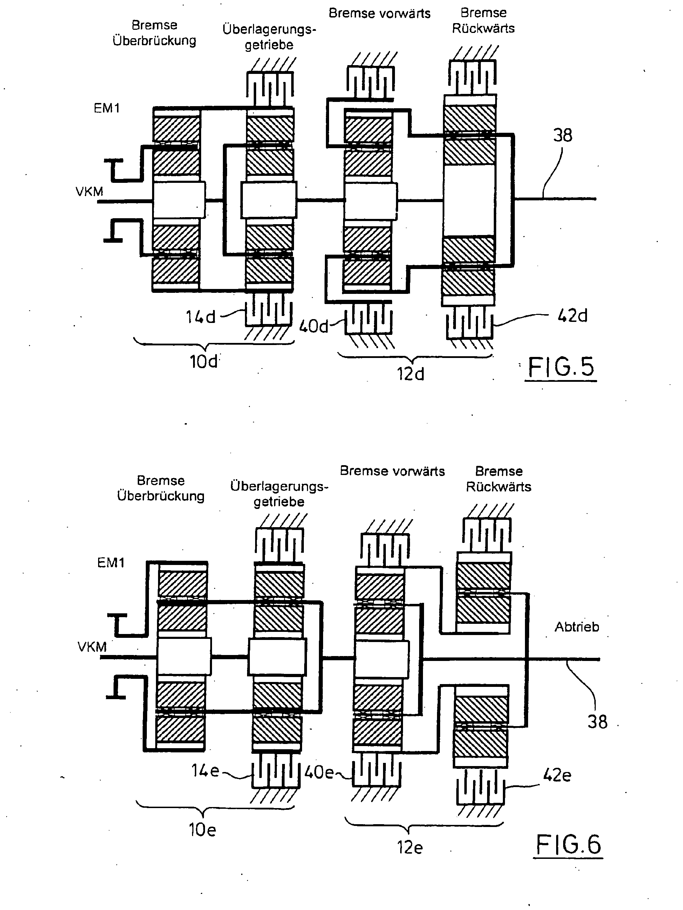

Fig. 5 zeigt ein 4-Wellen-Zweisteg-Umlaufgetriebe 10d und ein Wendegetriebe 12d als 4-Wellen-Umlaufgetriebe. Eine erste Koppelwelle ist durch die Hohlradwellen der beiden Planetengetriebe gebildet. Eine zweite Koppelwelle ist durch die Sonnenradwelle des einen und die Stegwelle des anderen Planetengetriebe gebildet.

In der Ausführung nach Fig. 6 ist das Umlaufgetriebe 10e ein 4-Wellen-Zweisteg-Umlaufgetriebe und das Wendegetriebe 12e ein 4-Wellen-Umlaufgetriebe. Die erste Koppelwelle des Umlaufgetriebes 10e wird durch die Stegwellen der beiden Planetengetriebe und die zweite Koppelwelle durch die Sonnenradwellen der beiden Planetengetriebe gebildet.

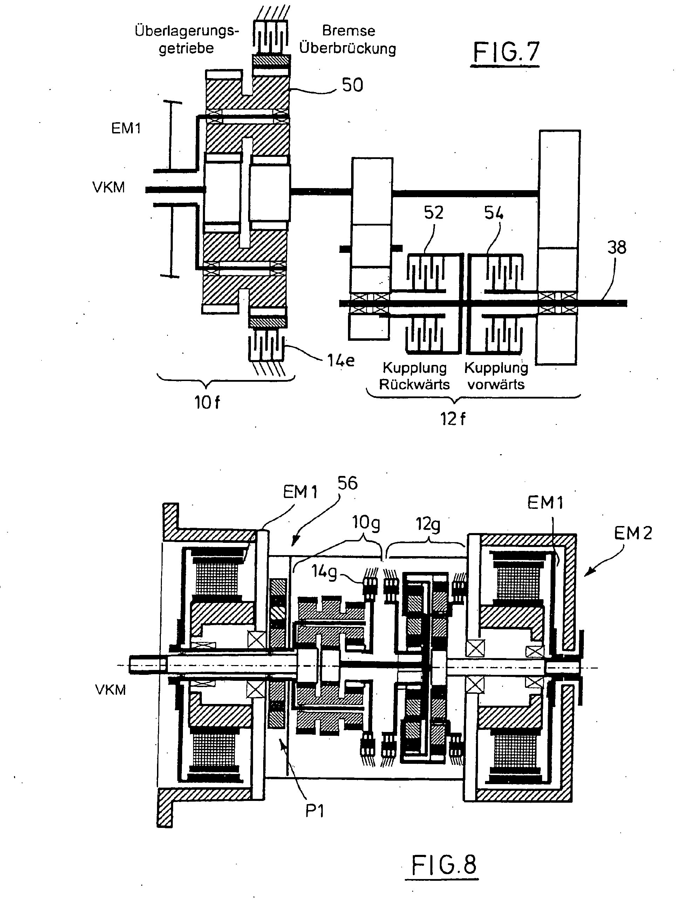

In Fig. 7 ist das Wendegetriebe 12f ein 4-Wellen-Einsteg-Umlaufgetriebe mit zweistufigen Stufenplaneten 50, wobei ein Sonnenrad und ein Hohlrad mit dem den Planeten der einen Stufe sowie ein Sonnen- oder Hohlrad mit den Planeten der anderen Stufe in Eingriff stehen. Der Steg sowie die drei mit den Planeten 50 kämmenden Zahnräder sind jeweils mit einer Anschlußwelle verbunden. Das Wendegetriebe 12f ist ein Vorlegegetriebe, wobei die Eingangswelle des Wendegetriebes 12f mit der Abtriebswelle des Umlaufgetriebes 10f verbunden ist und die Abtriebswelle des Wendegetriebes 12f mit mindestens einem angetriebenen Rad (hier nicht gezeigt) des Flurförderzeugs gekoppelt ist. Die Drehrichtung der Abtriebswelle 38 hängt davon ab, welche der beiden Kupplungen 52, 54 betätigt ist. Die Gangstufe des Wendegetriebes besteht aus drei miteinander kämmenden Zahnrädern und die andere Gangstufe aus zwei miteinander kämmenden Zahnrädern, so daß sich je nach Kupplungsbetätigung die eine oder andere Drehrichtung ergibt.

In Fig. 8 ist ein Getriebegehäuse 56 dargestellt, in dem erster und zweiter Elektromotor EM1 und EM2 koaxial und im axialen Abstand voneinander angeordnet sind. Der zweite Elektromotor EM2 ist konzentrisch um die Abtriebswelle des Wendegetriebes 12g angeordnet. Das Summiergetriebe (siehe Fig. 1) ist ersetzt durch eine direkte Anflanschung des Elektromotors EM2 an die Abtriebswelle des Wendegetriebes 12g. Das 4-Wellen-Umlaufgetriebe ist ein 4-Wellen-Einsteg-Umlaufgetriebe, wie es in Fig. 4 dargestellt ist. Das Wendegetriebe 12g ist ein 4-Wellen-Umlaufgetriebe. Eine konzentrisch angeordnete Hydropumpe P1 wird unmittelbar von der Hohlwelle des ersten Elektromotors EM1 angetrieben.

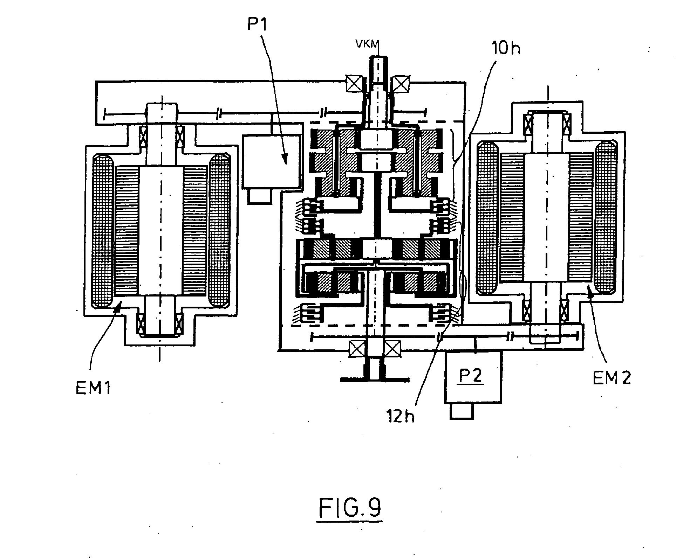

In Fig. 9 ist eine Alternative zur Anordnung nach Fig. 8 dargestellt, bei der die Elektromotoren EM1 und EM2 mit ihren Wellen parallel und im Abstand zueinander angeordnet sind. Das Umlaufgetriebe 10h und das Wendegetriebe 12h gleichen dem des Antriebssystems nach Fig. 8. Eine zweite Hydropumpe P2 ist von der Welle des zweiten Elektromotors EM2 durch entsprechendes Getriebe bzw. durch die Abtriebswelle des Wendegetriebes 12h angetrieben.

## Patentansprüche

1. Antriebssystem für ein Flurförderzeug mit
- einer Brennkraftmaschine (VKM)
- einem Umlaufgetriebe (10), das mit einer ersten Welle mit der Welle der Brennkraftmaschine (VKM) verbindbar ist,
- einem ersten Elektromotor (EM1), der mechanisch mit einer zweiten Welle des Umlaufgetriebes (10) gekoppelt und elektrisch mit einem Bordnetz des Fahrzeugs verbunden ist,
- einem mit einer Welle des Umlaufgetriebes (10) gekoppelten Umschaltgetriebe (12),
- einem mit dem Umschaltgetriebe (12) gekoppelten Summiergetriebe (20), dessen andere Eingangswelle mit einem elektrisch mit dem Bordnetz verbundenen zweiten Elektromotor (EM2) verbunden ist und dessen Abtriebswelle mit mindestens einem angetriebenen Rad (22, 24) des Flurförderzeugs gekoppelt ist,
- mindestens einem Verbraucher (P1) für mindestens eine Zusatzfunktion des Fahrzeugs, der mit einer der Wellen des Umlaufgetriebes (10) gekoppelt ist,
- einer Sensorvorrichtung, die die Drehzahl der Brennkraftmaschine (VKM) und des ersten und zweiten Elektromotors (EM1, EM2) erfaßt und entsprechende Signale erzeugt, und
- einer Steuer- und Regelvorrichtung (11), die nach Maßgabe von Sollwertsignalen der vom Bediener des Flurförderzeugs betätigten Sollwertgeber und unter Zugrundelegung der Ausgangssignale der Sensorvorrichtung die Drehzahlen und/oder Drehmomente der Elektromotoren (EM1, EM2) und der Brennkraftmaschine (VKM) steuert oder regelt, den Motor- oder Generatorbetrieb der Elektromotoren (EM1, EM2) schaltet und die Betätigung des Umschaltgetriebes (10) steuert
**dadurch gekennzeichnet, dass** ein 4-Wellen-Zweisteg- oder -Einsteg-Umlaufgetriebe (10) vorgesehen ist, die vierte Welle des 4-Wellen-Umlaufgetriebes (10) mit einer Bremse (14) gekoppelt ist und die Steuer- und Regelvorrichtung (11) die Bremse (14) steuert.

2. Antriebssystem nach Anspruch 1, **dadurch gekennzeichnet, daß** das angetriebene Rad (22, 24) und die Brennkraftmaschine (VKM) bezüglich ihrer Position zur Getriebeanordnung vertauscht sind.

3. Antriebssystem nach Anspruch 1 oder 2, **dadurch gekennzeichnet, daß** das Umschaltgetriebe (12) ein Wendegetriebe ist.

4. Antriebssystem nach einem der Ansprüche 1 bis 3, **dadurch gekennzeichnet, daß** der zweite Elektromotor von zwei parallel geschalteten Elektromotoren gebildet ist, die jeweils mit einem Antriebsrad verbunden sind.

5. Antriebssystem nach einem der Ansprüche 1 bis 4, **dadurch gekennzeichnet, daß** der Verbraucher (P1) für die Zusatzfunktion des Fahrzeugs mit der Welle des ersten Elektromotors (EM1) gekoppelt ist.

6. Antriebssystem nach einem der Ansprüche 1 bis 5, **dadurch gekennzeichnet, daß** mindestens ein weiterer Verbraucher (P2) für eine Zusatzfunktion des Fahrzeugs vorgesehen ist, der radseitig des Umschalt- oder Wendegetriebes oder des zweiten Elektromotors (EM2) angeordnet ist.

7. Antriebssystem nach Anspruch 1 oder 6, **dadurch gekennzeichnet, daß** der Verbraucher (P1, P2) für die Zusatzfunktion des Fahrzeugs eine Hydropumpe ist.

8. Antriebssystem nach Anspruch 7, **dadurch gekennzeichnet, daß** zumindest einen Hohlwellen-Hydropumpe vorgesehen ist, die konzentrisch zu einer Getriebewelle angeordnet ist.

9. Antriebssystem nach Anspruch 7 oder 8, **dadurch gekennzeichnet, daß** mindestens eine in beiden Drehrichtungen arbeitende Hydropumpe vorgesehen ist.

10. Antriebssystem nach einem der Ansprüche 7 bis 9, **dadurch gekennzeichnet, daß** zu Bremszwecken mindestens einer Hydropumpe eine steuerbare Drossel (15) zugeordnet ist.

11. Antriebssystem nach einem der Ansprüche 1 bis 10, **dadurch gekennzeichnet, daß** mindestens eine Bremse (17) radseitig des Umschalt- oder Wendegetriebes (12) oder des zweiten Elektromotors (EM2) angeordnet ist.

12. Antriebssystem nach einem der Ansprüche 1 bis 11, **dadurch gekennzeichnet, daß** die Bremse (14) eine Elektromagnetbremse, Scheibenbremse oder Lamellenbremse ist.

13. Antriebssystem nach einem der Ansprüche 1 bis 12, **dadurch gekennzeichnet, daß** eine Sensorvorrichtung die Temperaturen der Brennkraftmaschine (VKM), und/oder des ersten und zweiten Elektromotors (EM1, EM2), und/oder der Regel- und Steuervorrichtung (11) und/oder des elektrischen Speichers und/oder des Hydraulikmittels erfaßt und entsprechende Temperatursignale erzeugt, und die Steuer- und Regelvorrichtung (11) unter Zugrundelegung der Ausgangssignale der Sensorvorrichtung die Leistung der Brennkraftmaschine (VKM) und der Elektromotoren (EM1, EM2) derart steuert, daß vorgegebene Werte für die Betriebstemperaturen nicht überschritten werden.

14. Antriebssystem nach einem der Ansprüche 1 bis 13, **dadurch gekennzeichnet, daß** bei einem 4-Wellen-Zweisteg-Getriebe mit zwei Einzelwellen und zwei Koppelwellen die erste Koppelwelle durch die Stegwellen der beiden Plane tengetriebe und die zweite Koppelwelle durch die Hohlradwellen der beiden Planetengetriebe gebildet wird.

15. Antriebssystem nach einem der Ansprüche 1 bis 12, **dadurch gekennzeichnet, daß** bei einem 4-Wellen-Zweisteg-Getriebe mit zwei Einzelwellen und zwei Koppelwellen die erste Koppelwelle durch die Stegwelle des einen und die Hohlradwelle des anderen Planetengetriebes gebildet wird und die zweite Koppelwelle durch die Hohlradwelle des einen und die Stegwelle des anderen Planetengetriebes gebildet wird.

16. Antriebssystem nach einem der Ansprüche 1 bis 13, **dadurch gekennzeichnet, daß** bei einem 4-Wellen-Zweisteg-Getriebe mit zwei Einzelwellen und zwei Koppelwellen die erste Koppelwelle durch die Stegwellen der beiden Planetengetriebe und die zweite Koppelwelle durch die Sonnenradwelle des einen und die Hohlradwelle des anderen Planetengetriebes gebildet wird.

17. Antriebssystem nach einem der Ansprüche 1 bis 13, **dadurch gekennzeichnet, daß** bei einem 4-Wellen-Zweisteg-Getriebe mit zwei Einzelwellen und zwei Koppelwellen die erste Koppelwelle durch die Stegwelle des einen und die Sonnenradwelle des anderen Planetengetriebes und die zweite Koppelwelle durch die Hohlradwelle des einen und die Stegwelle des anderen Planetengetriebes gebildet wird.

18. Antriebssystem nach einem der Ansprüche 1 bis 13, **dadurch gekennzeichnet, daß** bei einem 4-Wellen-Zweisteg-Getriebe mit zwei Einzelwellen und zwei Koppelwellen die erste Koppelwelle durch die Hohlradwellen der beiden Planetengetriebe und die zweite Koppelwelle durch die Sonnenradwelle des einen und die Stegwelle des anderen Planetengetriebes gebildet wird.

19. Antriebssystem nach einem der Ansprüche 1 bis 13, **dadurch gekennzeichnet, daß** bei einem 4-Wellen-Zweisteg-Getriebe mit zwei Einzelwellen und zwei Koppelwellen die erste Koppelwelle durch die Stegwelle des einen und die Hohlradwelle des anderen Planetengetriebes und die zweite Koppelwelle durch die Hohlradwelle des einen und die Sonnenradwelle des anderen Planetengetriebes gebildet wird.

20. Antriebssystem nach einem der Ansprüche 1 bis 13, **dadurch gekennzeichnet, daß** bei einem 4-Wellen-Zweisteg-Getriebe mit zwei Einzelwellen und zwei Koppelwellen die erste Koppelwelle durch die Stegwellen der beiden Planetengetriebe und die zweite Koppelwelle durch die Sonnenradwellen der beiden Planetengetriebe gebildet wird.

21. Antriebssystem nach einem der Ansprüche 1 bis 13, **dadurch gekennzeichnet, daß** bei einem 4-Wellen-Zweisteg-Getriebe mit zwei Einzelwellen und zwei Koppelwellen die erste Koppelwelle durch die Stegwelle des einen und die Sonnenradwelle des anderen Planetengetriebes und die zweite Koppelwelle durch die Sonnenradwelle des einen und die Stegwelle des anderen Planetengetriebes gebildet wird.

22. Antriebssystem nach einem der Ansprüche 1 bis 13, **dadurch gekennzeichnet, daß** bei einem 4-Wellen-Zweisteg-Getriebe mit zwei Einzelwellen und zwei Koppelwellen die erste Koppelwelle durch die Stegwelle des einen und die Sonnenradwelle des anderen Planetengetriebes und die zweite Koppelwelle durch die Sonnenradwelle des einen und die Hohlradwelle des anderen Planetengetriebes gebildet wird.

23. Antriebssystem nach einem der Ansprüche 1 bis 13, **dadurch gekennzeichnet, daß** bei einem 4-Wellen-Zweisteg-Getriebe mit zwei Einzelwellen und zwei Koppelwellen die erste Koppelwelle durch die Stegwelle des einen und die Hohlradwelle des anderen Planetengetriebes und die zweite Koppelwelle durch die Sönnenradwellen der beiden Planetengetriebe gebildet wird.

24. Antriebssystem nach einem der Ansprüche 1 bis 13, **dadurch gekennzeichnet, daß** bei einem 4-Wellen-Zweisteg-Getriebe mit zwei Einzelwellen und zwei Koppelwellen die erste Koppelwelle durch die Hohlradwellen der beiden Planetengetriebe und die zweite Koppelwelle durch die Sonnenradwellen der beiden Planetengetriebe gebildet wird.

25. Antriebssystem nach einem der Ansprüche 1 bis 13, **dadurch gekennzeichnet, daß** bei einem 4-Wellen-Zweisteg-Getriebe mit zwei Einzelwellen und zwei Koppelwellen die erste Koppelwelle durch die Sonnenradwelle des einen und die Hohlradwelle des anderen Planetengetriebes und die zweite Koppelwelle durch die Hohlradwelle des einen und die Sonnenradwelle des anderen Planetengetriebes gebildet wird.

26. Antriebssystem nach einem der Ansprüche 1 bis 24, **dadurch gekennzeichnet, daß** bei einem 4-Wellen-Zweisteg-Umlaufgetriebe die Brennkraftmaschine an der einen Koppelwelle, der erste Elektromotor an der anderen Koppelwelle und die Bremse sowie das Umschaltgetriebe an den beiden Einzelwellen angeschlossen sind.

27. Antriebssystem nach einem der Ansprüche 1 bis 25, **dadurch gekennzeichnet, daß** bei einem 4-Wellen-Zweisteg-Umlaufgetriebe die Bremse an der einen Koppelwelle, der erste Elektromotor an der anderen Koppelwelle und die Brennkraftmaschine sowie das Umschaltgetriebe an den beiden Einzelwellen angeschlossen sind.

28. Antriebssystem nach einem der Ansprüche 1 bis 25, **dadurch gekennzeichnet, daß** bei einem 4-Wellen-Zweisteg-Umlaufgetriebe die Brennkraftmaschine an der einen Koppelwelle, die Bremse an der anderen Koppelwelle und der erste Elektromotor sowie das Umschaltgetriebe an den beiden Einzelwellen angeschlossen sind.

29. Antriebssystem nach einem der Ansprüche 1 bis 25, **dadurch gekennzeichnet, daß** bei einem 4-Wellen-Zweisteg-Umlaufgetriebe der erste Elektromotor an der einen Koppelwelle, das Umschaltgetriebe an der anderen Koppelwelle und die Bremse sowie die Brennkraftmaschine an den beiden Einzelwellen angeschlossen sind.

30. Antriebssystem nach einem der Ansprüche 1 bis 25, **dadurch gekennzeichnet, daß** bei einem 4-Wellen-Zweisteg-Umlaufgetriebe mit zwei Einzelwellen und zwei Koppelwellen die Brennkraftmaschine an der einen Koppelwelle, das Umschaltgetriebe an der anderen Koppelwelle und die Bremse sowie der erste Elektromotor an den beiden Einzelwellen angeschlossen sind.

31. Antriebssystem nach einem der Ansprüche 1 bis 25, **dadurch gekennzeichnet, daß** bei einem 4-Wellen-Zweisteg-Umlaufgetriebe mit zwei Einzelwellen und zwei Koppelwellen die Bremse an der einen Koppelwelle, das Umschaltgetriebe an der anderen Koppelwelle und die Brennkraftmaschine sowie der erste Elektromotor an den beiden Einzelwellen angeschlossen sind.

32. Antriebssystem nach einem der Ansprüche 1 bis 29, **dadurch gekennzeichnet, daß** bei einem 4-Wellen-Zweisteg-Umlaufgetriebe die Planeten einer Stufe als Stufenplaneten ausgeführt und statt Hohlrädern Sonnenräder vorgesehen sind.

33. Antriebssystem nach einem der Ansprüche 1 bis 13, **dadurch gekennzeichnet, daß** bei einem 4-Wellen-Einsteg-Umlaufgetriebe der Steg mit dreistufigen Stufenplaneten versehen ist, wobei die Planeten jeder Stufe jeweils mit einem Sonnen- oder Hohlrad im Eingriff stehen und der Steg sowie die drei mit den Planeten kämmenden Zahnräder jeweils mit einer Anschlußwelle verbunden sind.

34. Antriebssystem nach einem der Ansprüche 1 bis 13, **dadurch gekennzeichnet, daß** bei einem 4-Wellen-Einsteg-Umlaufgetriebe der Steg mit zweistufigen Stufenplaneten versehen ist, wobei ein Sonnen- und ein Hohlrad mit den Planeten der einen Stufe sowie ein Sonnen- oder Hohlrad mit den Planeten der anderen Stufe im Eingriff stehen und der Steg sowie die drei mit den Planeten kämmenden Zahnräder jeweils mit einer Anschlusswelle verbunden sind.

35. Antriebssystem nach den Ansprüchen 32 bis 34, **dadurch gekennzeichnet, daß** bei einem 4-Wellen-Umlaufgetriebe zumindest ein weiteres, mit einer zweiten Bremse verbundenes Sonnen- oder Hohlrad vorhanden ist.

36. Antriebssystem nach einem der Ansprüche 1 bis 12 oder 32 oder 33, **dadurch gekennzeichnet, daß** bei einem 4-Wellen-Einsteg-Umlaufgetriebe die Brennkraftmaschine an der Stegwelle, der erste Elektromotor, die Bremse sowie das Umschaltgetriebe mit je einer Anschlußwelle verbunden sind.

37. Antriebssystem nach einem der Ansprüche 1 bis 13 oder 32 oder 33, **dadurch gekennzeichnet, daß** bei einem 4-Wellen-Einsteg-Umlaufgetriebe der erste Elektromotor an der Stegwelle, die Brennkraftmaschine, die Bremse sowie das Umschaltgetriebe mit je einer Anschlußwelle verbunden sind.

38. Antriebssystem nach einem der Ansprüche 1 bis 13 oder 32 oder 33, **dadurch gekennzeichnet, daß** bei einem 4-Wellen-Einsteg-Umlaufgetriebe die Bremse an der Stegwelle, der erste Elektromotor, die Brennkraftmaschine sowie das Umschaltgetriebe mit je einer der Anschlußwelle verbunden sind.

39. Antriebssystem nach einem der Ansprüche 1 bis 13 oder 32 oder 33, **dadurch gekennzeichnet, daß** bei einem 4-Wellen-Einsteg-Umlaufgetriebe das Umschaltgetriebe mit der Stegwelle, der erste Elektromotor, die Bremse sowie die Brennkraftmaschine mit je einer der Anschlußwellen verbunden sind.

40. Antriebssystem nach einem der Ansprüche 1 bis 39, **dadurch gekennzeichnet, daß** der erste Elektromotor (EM1) als Hohlwellenmotor ausgeführt und konzentrisch um die eine Anschlußwelle des 4-Wellen-Umlaufgetriebes (10) angeordnet ist.

41. Antriebssystem nach einem der Ansprüche 1 bis 40, **dadurch gekennzeichnet, daß** der zweite Elektromotor (EM2) als Hohlwellenmotor ausgeführt ist und konzentrisch um die Abtriebswelle des Umschaltgetriebes (12) angeordnet ist, wobei das Summiergetriebe (20) ggf. durch eine direkte Anflanschung des Hohlwellenmotors an die Abtriebswelle des Umschaltgetriebes (12) ersetzt wird.

42. Antriebssystem nach einem der Ansprüche 1 bis 41, **dadurch gekennzeichnet, daß** der erste und der zweite Elektromotor (EM1, EM2) seitlich neben dem 4-Wellen-Umlaufgetriebes (10) bzw. des Umschaltgetriebes (12) angeordnet sind.

43. Antriebssystem nach einem der Ansprüche 1 bis 40, **dadurch gekennzeichnet, daß** bei dem Umschalt- oder Wendegetriebe (12) eine Neutralstellung sowie zwei oder mehr Gänge schaltbar sind.

44. Antriebssystem nach einem der Ansprüche 1 bis 43, **dadurch gekennzeichnet, daß** das Umschalt- bzw. Wendegetriebe als 4-Wellen-Zweisteg-Getriebe mit zwei Einzelwellen und zwei Koppelwellen ausgeführt und konzentrisch zu dem ersten 4-Wellen-Umlaufgetriebes angeordnet ist, wobei die erste Welle des Umschalt- bzw. Wendegetriebes mit der Abtriebswelle des ersten 4-Wellen-Umlaufgetriebes verbindbar ist, wobei die zweite und dritte Welle des Umschalt- bzw. Wendegetriebes mit je einer Bremse gekoppelt sind und wobei die vierte Welle des Umschalt- bzw. Wendegetriebes mit mindestens einem angetriebenen Rad des Flurförderzeugs gekoppelt ist.

45. Antriebssystem nach einem der Ansprüche 1 bis 43, **dadurch gekennzeichnet, daß** bei einem Umschalt- bzw. Wendegetriebe als 4-Wellen-Zweisteg-Umlaufgetriebe die Bremsen an den beiden Einzelwellen angeordnet sind.

46. Antriebssystem nach einem der Ansprüche 1 bis 43, **dadurch gekennzeichnet, daß** bei einem Umschalt- bzw. Wendegetriebe als 4-Wellen-Zweisteg-Umlaufgetriebe die Bremsen an den beiden Koppelwellen angeordnet sind.

47. Antriebssystem nach einem der Ansprüche 1 bis 43, **dadurch gekennzeichnet, daß** bei einem Umschalt- bzw. Wendegetriebe als 4-Wellen-Zweisteg-Umlaufgetriebe eine Bremse an einer Koppelwelle, die andere Bremse an einer Einzelwelle angeordnet ist.

48. Antriebssystem nach einem der Ansprüche 1 bis 43, **dadurch gekennzeichnet, daß** das Umschalt- bzw. Wendegetriebe als 3-Wellenumlaufgetriebe ausgeführt ist, wobei die erste Welle des Umschalt- bzw. Wendegetriebes mit der Abtriebswelle des 4-Wellen-Umlaufgetriebes verbindbar ist, wobei die zweite Welle des Umschalt- bzw. Wendegetriebes mit mindestens einem angetriebenen Rad des Flurförderzeugs gekoppelt ist, wobei die dritte Welle des Umschalt- bzw. Wendegetriebes mittels einer Bremse festsetzbar ist und wobei zwei Wellen des Umschalt- bzw. Wendegetriebes mittels einer Kupplung miteinander verbindbar sind.

49. Antriebssystem nach einem der Ansprüche 1 bis 43, **dadurch gekennzeichnet, daß** das Umschalt- bzw. Wendegetriebe als Vorgelegegetriebe ausgeführt ist, wobei die Eingangswelle des Umschalt- bzw. Wendegetriebes mit der Abtriebswelle des 4-Wellen-Umlaufgetriebes verbindbar ist und wobei die Abtriebswelle des Umschalt- bzw. Wendegetriebes mit mindestens einem angetriebenen Rad des Flurförderzeugs gekoppelt ist.

50. Antriebssystem nach einem der Ansprüche 1 bis 47, **dadurch gekennzeichnet, daß** das Bordnetz mit einem elektrischen Speicher versehen ist und eine Fahrzeug-Bremssteuerung (13) im Falle einer geringen Soll-Bremskraft das Umschalt- bzw. Wendegetriebe (12) in Neutralstellung beläßt bzw. schaltet und den zweiten Elektromotor (EM2) derart steuert, daß das Bremsmoment alleine von dem zweiten Elektromotor (EM2) durch generatorisches Bremsen aufgebracht wird und der generatorisch erzeugte Strom zum Laden des elektrischen Speichers benutzt wird.

51. Antriebssystem nach einem der Ansprüche 1 bis 49, **dadurch gekennzeichnet, daß** das Bordnetz mit einem elektrischen Speicher vorgesehen und eine Fahrzeug-Bremssteuerung (13) im Falle einer großen Soll-Bremskraft das Umschalt- bzw. Wendegetriebe (12) in die zur jeweiligen Fahrtrichtung/Fahrgeschwindigkeit gehörende Schaltstellung beläßt bzw. schaltet und den zweiten Elektromotor (EM2) derart steuert, daß das zulässige generatorische Bremsmoment aufgebracht wird und der generatorisch erzeugte Strom zum Laden des elektrischen Speichers benutzt wird, die Brennkraftmaschine (VKM) in den Mitlaufbetrieb steuert und den ersten Elektromotor (EM1) derart steuert, daß die Drehzahl der über das 4-Wellen-Umlaufgetriebe (10) angeschlossenen Brennkraftmaschine (VKM) bestimmte, vorgegebene Werte annimmt und der generatorisch erzeugte Strom zum Laden des elektrischen Speichers benutzt wird.

52. Antriebssystem nach einem der Ansprüche 1 bis 50, dadurch gekenzeichnet, daß ein Fahrzeug-Bremssteuerung (13) das Umschalt- bzw. Wendegtriebe (12) in Neutralstellung beläßt bzw. schaltet, sobald eine vorgegebene Fahrgeschwindigkeit unterschritten wird und den zweiten Elektromotor (EM2) derart steuert, daß das Bremsmoment alleine von dem zweiten Elektromotor (EM2) durch generatorisches Bremsen aufgebracht wird, die Fahrzeug-Bremssteuerung (13) die mit dem 4-Wellen-Umlaufgetriebe gekoppelte Bremse (14) betätigt (d.h. schließt) und die den ersten Elektromotor (EM1) derart steuert, daß die an das 4-Wellen-Umlaufgetriebe (10) angeschlossene Brennkraftmaschine (VKM) beschleunigt wird, bis die Drehzahl der Brennkraftmaschine (VKM) bestimmte, vorgegebene Werte annimmt, wobei der vom zweiten Elektromotor (EM2) generatorisch erzeugte Strom zumindest teilweise verbraucht wird.

53. Antriebssystem nach einem der Ansprüche 1 bis 50, **dadurch gekennzeichnet, daß** eine Fahrzeug-Bremssteuerung (13) die Drossel der Hydropumpe derart steuert, daß bei Überschreiten vorgegebener Werte für die Drehzahl der Brennkraftmaschine (VKM) ein zusätzliches Bremsmoment erzeugt wird.

54. Antriebssystem nach einem der Ansprüche 1 bis 52, **dadurch gekennzeichnet, daß** eine Fahrzeug-Bremssteuerung (13) vorgesehen ist, die eine Drossel (15) der zumindest einen Hydropumpe (Verbraucher P2) derart steuert, daß ein zusätzliches Bremsmoment erzeugt wird, wenn die Abweichung der Bremsverzögerung des Fahrzeugs vom Sollwert einen vorgegebenen Wert überschreitet.

55. Antriebssystem nach einem der Ansprüche 1 bis 53, **dadurch gekennzeichnet, daß** eine Fahrzeug-Bremssteuerung (13) eine radseitige Bremse (17) derart steuert, daß sie bei Überschreiten der vorgegebenen Werte für die Drehzahl der Brennkraftmaschine (VKM) ein zusätzliches Bremsmoment erzeugt.

56. Antriebssystem nach einem der Ansprüche 1 bis 53, **dadurch gekennzeichnet, daß** eine Fahrzeug-Bremssteuerung (13), zumindest eine radseitige Bremse (17) derart steuert, daß ein zusätzliches Bremsmoment erzeugt wird, wenn die Abweichung der Bremsverzögerung des Fahrzeugs vom Sollwert einen vorgegebenen Wert überschreitet.

57. Antriebssystem nach einem der Ansprüche 1 bis 55, **dadurch gekennzeichnet, daß** durch Betätigen der Bremse (14) am 4-Wellen-Umlaufgetriebe (10) und Trennen des Umschaltgetriebes (12) die Leistung der Brennkraftmaschine (VKM)auf den ersten Elektromotor (EM1) übertragen wird und dieser als Generator arbeitet, wobei der auf diese Weise erzeugte Strom zum Laden der Batterie, für elektrische Verbraucher des Fahrzeugs, externe elektrische Verbraucher oder als Fahrstrom für den zweiten Elektromotor (EM2) verwendet wird.

58. Antriebssystem nach einem der Ansprüche 1 bis 56, **dadurch gekennzeichnet, daß** die Bremse (14) am 4-Wellen-Umlaufgetriebe geöffnet ist und das Umschalt- bzw. Wendegetriebe (12) in die zur jeweiligen Fahrtrichtung gehörende Schaltstellung geschaltet wird, und die Leistung der Brennkraftmaschine (VKM) zum Teil mechanisch von der mit dem Umschaltgetriebe (12) gekoppelten Welle des 4-Wellen-Umlaufgetriebes (10) auf das Summiergetriebe (20) übertragen, zum anderen Teil elektrisch von einem Elektromotor (EM2) über das Bordnetz auf den anderen und vom diesem zu dem Summiergetriebe (20) übertragen wird.

59. Antriebssystem nach einem der Ansprüche 1 bis 56, **dadurch gekennzeichnet, daß** in einem bestimmten Betriebsbereich, z.B. bei hoher Zugkraft und niedriger Fahrgeschwindigkeit die Bremse (14) am 4-Wellen-Umlaufgetriebe (10) betätigt und das Umschalt- bzw. Wendegetriebe (12) in die zur jeweiligen Fahrtrichtung gehörende Schaltstellung belassen bzw. geschaltet wird und die Leistung der Brennkraftmaschine (VKM) auf das Antriebsrad (22, 24) unmittelbar mechanisch übertragen wird, wobei beide Elektromotoren (EM1, EM2) mit einer vorgegebenen Übersetzung mit der Fahrgeschwindigkeit gekoppelt sind.

60. Antriebssystem nach Anspruch 58, **dadurch gekennzeichnet, daß** die Bremse am 4-Wellen-Umlaufgetriebe (10) im Punkt des Drehzahl-Nulldurchgangs der Welle, an der die Bremse (14) angeschlossen ist, betätigt wird.

61. Antriebssystem nach Anspruch 57 und 58, **dadurch gekennzeichnet, daß** der Übergang vom seriellen Betrieb zum leistungsverzweigten Betrieb erfolgt, indem die Bremse (14) am 4-Wellen-Umlaufgetriebe (10) betätigt bleibt, das Umschalt- bzw. Wendegetriebe (12) im Punkt synchroner Drehzahl von An - und Abtrieb in die zur jeweiligen Fahrtrichtung gehörende Schaltstellung geschaltet wird, die Leistung der Brennkraftmaschine (VKM) und der Elektromotoren (EM1, EM2) auf den Lastzustand im leistungsverzweigten Betrieb geregelt wird und danach die Bremse (14) am 4-Wellen-Umlaufgetriebe (10) gelöst wird.

62. Antriebssystem nach einem der Ansprüche 1 bis 59, **dadurch gekennzeichnet, daß** der Übergang von dem leistungsverzweigten Betrieb zu dem seriellen Betrieb erfolgt, indem die Bremse (14) am 4-Wellen-Umlaufgetriebe (10) im Punkt des Drehzahl-Nulldurchgangs der Welle, an der die Bremse (14) angeschlossen ist, betätigt wird, die Leistung der Brennkraftmaschine (VKM) und der Elektromotoren (EM 1, EM2) auf den Lastzustand im seriellen Betrieb geregelt wird und danach das Umschalt- bzw. Wendegetriebe (12) in die Neutralstellung geschaltet wird.

63. Antriebssystem nach Anspruch 56 und 57, **dadurch gekennzeichnet, daß** der Übergang vom seriellen Betrieb zum leistungsverzweigten Betrieb erfolgt, indem der zweite Elektromotor (EM2) derart geregelt wird, daß er das Abtriebsdrehmoment vollständig aufbringt, wobei der Fahrstrom einem elektrischen Speicher entnommen wird, dann die Bremse (14) am 4-Wellen-Umlaufgetriebe (10) gelöst wird, die Drehzahl der Brennkraftmaschine (VKM) und des ersten Elektromotors (EM1) derart geregelt, daß das Umschalt- bzw. Wendegetriebe (12) den Punkt synchroner Drehzahl von An- und Abtrieb erreicht, wonach die zur jeweiligen Fahrtrichtung gehörende Schaltstellung geschaltet wird, und die Brennkraftmaschine (VKM) und die beiden Elektromotoren (EM1, EM2) auf den Lastzustand im leistungsverzweigten Betrieb geregelt werden.

64. Antriebssystem nach einem der Ansprüche 1 bis 63, **dadurch gekennzeichnet, daß** durch Betätigen der Bremse (14) am 4-Wellen-Umlaufgetriebe (10) und Trennen des Umschaltgetriebes (12) die Leistung der Brennkraftmaschine (VKM) auf den Verbraucher (P1) für die Zusatzfunktionen des Fahrzeugs, der mit der Welle des ersten Elektromotors (EM1) gekoppelt ist, übertragen wird.

65. Antriebssystem nach einem der vorangehenden Ansprüche, **dadurch gekennzeichnet, daß** durch Betätigen der Bremse (14) am 4-Wellen-Umlaufgetriebe (10) und Trennen des Umschaltgetriebes (12) die Leistung des ersten Elektromotors (EM1) auf die Brennkraftmaschine (VKM) übertragen wird und diese gestartet wird.

66. Antriebssystem nach einem der Ansprüche 1 bis 55, **dadurch gekennzeichnet, daß** die Leistung des ersten Elektromotors (EM1) auf den Verbraucher (P1) für die Zusatzfunktionen des Fahrzeugs übertragen wird, der mit der Welle des ersten Elektromotors gekoppelt ist, wobei die elektrische Leistung einem elektrischen Speicher entnommen wird, die Bremse (14) am 4-Wellen-Umlaufgetriebe (10) geöffnet und das Umschaltgetriebe (10) getrennt wird.

67. Antriebssystem nach einem der Ansprüche 1 bis 55, **dadurch gekennzeichnet, daß** die Leistung des Verbrauchers (P1) für die Zusatzfunktion des Fahrzeugs, der mit der Welle des ersten Elektromotors (EM1) gekoppelt ist, auf den ersten Elektromotor (EM1) übertragen wird und dieser generatorisch Strom erzeugt, der dem elektrischen Speicher zugeführt wird, wobei die Bremse (14) am 4-Wellen-Umlaufgetriebe (10) geöffnet und das Umschaltgetriebe (12) getrennt ist.

68. Antriebssystem nach einem der Ansprüche 1 bis 55, **dadurch gekennzeichnet, daß** der zweite Elektromotor (EM2) das Abtriebsdrehmoment vollständig aufbringt, wobei der Fahrstrom aus einem elektrischen Speicher entnommen wird, und das Umschaltgetriebe (12) getrennt wird.

69. Antriebssystem nach einem der vorangehenden Ansprüche, **dadurch gekennzeichnet, daß** die Brennkraftmaschine (VKM) während der Fahrt gestartet wird, indem der zweite Elektromotor (EM2) das Abtriebsmoment vollständig aufbringt, wobei der Fahrstrom dem elektrischen Speicher entnommen wird, und das Umschaltgetriebe (12) in die zur jeweiligen Fahrtrichtung gehörende Schaltstellung geschaltet wird und der erste Elektromotor (EM1) derart angesteuert wird, daß an der Brennkraftmaschine (VKM) das zum Starten notwendige Drehmoment aufgebracht wird, wobei die Bremse (14) am 4-Wellen-Umlaufgetriebe (10) getrennt ist.

70. Antriebssystem nach einem der vorangehenden Ansprüche, **dadurch gekennzeichnet, daß** die Brennkraftmaschine (VKM) während der Fahrt gestartet wird, indem der zweite Elektromotor (EM2) das Abtriebsmoment vollständig aufbringt, wobei der Fahrstrom dem elektrischen Speicher entnommen wird, die Bremse (14) am 4-Wellen-Umlaufgetriebe (10) betätigt ist und das Umschaltgetriebe (12) in die zur jeweiligen Fahrtrichtung gehörende Schaltstellung geschaltet wird wobei der erste Elektromotor (EM 1) derart angesteuert wird, daß an der Brennkraftmaschine (VKM) das zum Starten notwendige Drehmoment aufgebracht wird.

## Claims

1. Drive system for an industrial truck comprising
- an internal combustion engine (VKM)
- a epicyclic gearing (10) which with a first shaft may be connected to the shaft of the internal combustion engine (VKM),
- a first electric motor (EM1) which is mechanically coupled to a second shaft of the epicyclic gearing (10) and is electrically connected to an onboard power supply of the vehicle,
- a change gear (12) coupled to a shaft of the epicyclic gearing (10),
- a summing gear (20) coupled to the change gear (12), the other input shaft thereof being connected to a second electric motor (EM2) connected electrically to the onboard power supply and the output shaft thereof being coupled to at least one driven wheel (22, 24) of the industrial truck,
- at least one consumer (P1) for at least one additional function of the vehicle which is coupled to one of the shafts of the epicyclic gearing (10),
- a sensor device which detects the speed of the internal combustion engine (VKM) and the first and second electric motor (EM1, EM2) and generates corresponding signals, and
- a control and regulating device (11) which controls or regulates the speeds and/or torques of the electric motors (EM1, EM2) and the internal combustion engine (VKM) according to setpoint signals of the set value generator actuated by the operator of the industrial truck and by taking as a basis the output signals of the sensor device, switches the motor operation or generator operation of the electric motors (EM1, EM2) and controls the actuation of the change gear (10), **characterized in that** a four-shaft epicyclic gearing (10) consisting of two or one fixed links is provided, the fourth shaft of the four-shaft epicyclic gearing (10) is coupled to a brake (14) and the control and regulating device (11) controls the brake (14).

2. Drive system according to Claim 1, **characterized in that** the driven wheel (22, 24) and the internal combustion engine (VKM) are exchanged relative to their position on the gear arrangement.

3. Drive system according to Claim 1 or 2, **characterized in that** the change gear (12) is a reversing gear.

4. Drive system according to one of Claims 1 to 3, **characterized in that** the second electric motor is formed by two electric motors arranged in parallel which are respectively connected to a drive wheel.

5. Drive system according to one of Claims 1 to 4, **characterized in that** the consumer (P1) for the additional function of the vehicle is coupled to the shaft of the first electric motor (EM1).

6. Drive system according to one of Claims 1 to 5, **characterized in that** at least one further consumer (P2) is provided for an additional function of the vehicle, which is arranged on the wheel side of the change gear or reversing gear or the second electric motor (EM2).

7. Drive system according to Claim 1 or 6, **characterized in that** the consumer (PI, P2) for the additional function of the vehicle is a hydraulic pump.

8. Drive system according to Claim 7, **characterized in that** at least one hollow shaft-hydraulic pump is provided which is arranged concentrically to a gear shaft.

9. Drive system according to Claim 7 or 8, **characterized in that** at least one hydraulic pump is provided, operating in both rotational directions.

10. Drive system according to one of Claims 7 to 9, **characterized in that** for braking purposes one controllable throttle (15) is associated with at least one hydraulic pump.

11. Drive system according to one of Claims 1 to 10, **characterized in that** at least one brake (17) is arranged on the wheel side of the change gear or reversing gear (12) or the second electric motor (EM2).

12. Drive system according to one of Claims 1 to 11, **characterized in that** the brake (14) is an electromagnetic brake, disc brake or multiple disc brake.

13. Drive system according to one of Claims 1 to 12, **characterized in that** a sensor device detects the temperatures of the internal combustion engine (VKM) and/or the first and second electric motor (EM1, EM2) and/or the regulating and control device (11) and/or the electrical accumulator and/or the hydraulic means and generates corresponding temperature signals and the control and regulating device (11) controls the power of the internal combustion engine (VKM) and the electric motors (EM1, EM2) by taking as a basis the output signals of the sensor device such that predetermined values for the operating temperatures are not exceeded.

14. Drive system according to one of Claims 1 to 13, **characterized in that** with a four-shaft gearing consisting of two fixed links, with two separate shafts and two coupling shafts, the first coupling shaft is formed by the spider shafts of the two planetary gears and the second coupling shaft is formed by the ring gear shafts of the two planetary gears.

15. Drive system according to one of Claims 1 to 12, **characterized in that** in a four-shaft gearing consisting of two fixed links with two separate shafts and two coupling shafts, the first coupling shaft is formed by the spider shaft of the one planetary gear system and the ring gear shaft of the other planetary gear system and the second coupling shaft is formed by the ring gear shaft of the one planetary gear system and the spider shaft of the other planetary gear system.

16. Drive system according to one of Claims 1 to 13, **characterized in that** in a four-shaft gearing consisting of two fixed links, with two separate shafts and two coupling shafts, the first coupling shaft is formed by the spider shafts of the two planetary gear systems and the second coupling shaft is formed by the sun wheel shaft of the one planetary gear system and the ring gear shaft of the other planetary gear system.

17. Drive system according to one of Claims 1 to 13, **characterized in that** in a four-shaft gearing consisting of two fixed links, with two separate shafts and two coupling shafts, the first coupling shaft is formed by the spider shaft of the one planetary gear system and the sun wheel shaft of the other planetary gear system and the second coupling shaft is formed by the ring gear shaft of the one planetary gear system and the spider shaft of the other planetary gear system.

18. Drive system according to one of Claims 1 to 13, **characterized in that** in a four-shaft gearing consisting of two fixed links, with two separate shafts and two coupling shafts, the first coupling shaft is formed by the ring gear shafts of the two planetary gear systems and the second coupling shaft is formed by the sun wheel shaft of the one planetary gear system and the spider shaft of the other planetary gear system.

19. Drive system according to one of Claims 1 to 13, **characterized in that** in a four-shaft gearing consisting of two fixed links, with two separate shafts and two coupling shafts, the first coupling shaft is formed by the spider shaft of the one planetary gear system and the ring gear shaft of the other planetary gear system and the second coupling shaft is formed by the ring gear shaft of the one planetary gear system and the sun wheel shaft of the other planetary gear system.

20. Drive system according to one of Claims 1 to 13, **characterized in that** in a four-shaft gearing consisting of two fixed links, with two separate shafts and two coupling shafts, the first coupling shaft is formed by the spider shafts of the two planetary gear systems and the second coupling shaft is formed by the sun wheel shafts of the two planetary gear systems.

21. Drive system according to one of Claims 1 to 13, **characterized in that** in a four-shaft gearing consisting of two fixed links, with two separate shafts and two coupling shafts, the first coupling shaft is formed by the spider shaft of the one planetary gear system and the sun wheel shaft of the other planetary gear system and the second coupling shaft is formed by the sun wheel shaft of the one planetary gear system and the spider shaft of the other planetary gear system.

22. Drive system according to one of Claims 1 to 13, **characterized in that** in a four-shaft gearing consisting of two fixed links, with two separate shafts and two coupling shafts, the first coupling shaft is formed by the spider shaft of the one planetary gear system and the sun wheel shaft of the other planetary gear system and the second coupling shaft is formed by the sun wheel shaft of the one planetary gear system and the ring gear shaft of the other planetary gear system.

23. Drive system according to one of Claims 1 to 13, **characterized in that** in a four-shaft gearing consisting of two fixed links, with two separate shafts and two coupling shafts, the first coupling shaft is formed by the spider shaft of the one planetary gear system and the ring gear shaft of the other planetary gear system and the second coupling shaft is formed by the sun wheel shafts of the two planetary gear systems.

24. Drive system according to one of Claims 1 to 13, **characterized in that** in a four-shaft gearing consisting of two fixed links, with two separate shafts and two coupling shafts, the first coupling shaft is formed by the ring gear shafts of the two planetary gear systems and the second coupling shaft is formed by the sun wheel shafts of the two planetary gear systems.

25. Drive system according to one of Claims 1 to 13, **characterized in that** in a four-shaft gearing consisting of two fixed links, with two separate shafts and two coupling shafts, the first coupling shaft is formed by the sun wheel shaft of the one planetary gear system and the ring gear shaft of the other planetary gear system and the second coupling shaft is formed by the ring gear shaft of the one planetary gear system and the sun wheel shaft of the other planetary gear system.

26. Drive system according to one of Claims 1 to 24, **characterized in that** in a four-shaft epicyclic gearing consisting of two fixed links, the internal combustion engine is connected to the one coupling shaft, the first electric motor to the other coupling shaft and the brake as well as the change gear to the two separate shafts.

27. Drive system according to one of Claims 1 to 25, **characterized in that** in a four-shaft epicyclic gearing consisting of two fixed links, the brake is connected to the one coupling shaft, the first electric motor to the other coupling shaft and the internal combustion engine as well as the change gear to the two separate shafts.

28. Drive system according to one of Claims 1 to 25, **characterized in that** in a four-shaft epicyclic gearing consisting of two fixed links, the internal combustion engine is connected to the one coupling shaft, the brake to the other coupling shaft and the first electric motor as well as the change gear to the two separate shafts.

29. Drive system according to one of Claims 1 to 25, **characterized in that** in a four-shaft epicyclic gearing consisting of two fixed links, the first electric motor is connected to the one coupling shaft, the change gear to the other coupling shaft and the brake as well as the internal combustion engine to the two separate shafts.

30. Drive system according to one of Claims 1 to 25, **characterized in that** in a four-shaft epicyclic gearing consisting of two fixed links, with two separate shafts and two coupling shafts the internal combustion engine is connected to the one coupling shaft, the change gear to the other coupling shaft and the brake as well as the first electric motor to the two separate shafts.

31. Drive system according to one of Claims 1 to 25, **characterized in that** in a four-shaft epicyclic gearing consisting of two fixed links, with two separate shafts and two coupling shafts the brake is connected to the one coupling shaft, the change gear to the other coupling shaft and the internal combustion engine as well as the first electric motor to the two separate shafts.

32. Drive system according to one of Claims 1 to 29, **characterized in that** in a four-shaft epicyclic gearing consisting of two fixed links, the planetary gears of one step are designed as stepped planetary gears and sun wheels are provided instead of ring gears.

33. Drive system according to one of Claims 1 to 13, **characterized in that** in a four-shaft epicyclic gearing consisting of one fixed link, the fixed link is provided with three-step planetary gears, the planetary gears of each step being respectively in engagement with a sun wheel or ring gear and the fixed link as well as the three gearwheels meshing with the planetary gears being respectively connected to a connecting shaft.

34. Drive system according to one of Claims 1 to 13, **characterized in that** in a four-shaft epicyclic gearing consisting of one fixed link, the fixed link is provided with two-step planetary gears, a sun wheel and a ring gear being in engagement with the planetary gears of the one step as well as a sun wheel or ring gear being in engagement with the planetary gears of the other step and the fixed link as well as the three gearwheels meshing with the planetary gears being respectively connected to a connecting shaft.

35. Drive system according to Claims 32 to 34, **characterized in that** in a four-shaft epicyclic gearing, at least one further sun wheel or ring gear connected to a second brake is present.

36. Drive system according to one of Claims 1 to 12 or 32 or 33, **characterized in that** in a four-shaft epicyclic gearing consisting of one fixed link, the internal combustion engine on the spider shaft, the first electric motor, the brake as well as the change gear are connected to one respective connecting shaft.

37. Drive system according to one of Claims 1 to 13 or 32 or 33, **characterized in that** in a four-shaft epicyclic gearing consisting of one fixed link, the first electric motor on the spider shaft, the internal combustion engine, the brake as well as the change gear are connected to one respective connecting shaft.

38. Drive system according to one of Claims 1 to 13 or 32 or 33, **characterized in that** in a four-shaft epicyclic gearing consisting of one fixed link, the brake on the spider shaft, the first electric motor, the internal combustion engine as well as the change gear are connected to one respective connecting shaft.

39. Drive system according to one of Claims 1 to 13 or 32 or 33, **characterized in that** in a four-shaft epicyclic gearing consisting of one fixed link, the change gear with the spider shaft, the first electric motor, the brake as well as the internal combustion engine are connected to one respective connecting shaft.

40. Drive system according to one of Claims 1 to 39, **characterized in that** the first electric motor (EM1) is configured as a hollow shaft motor and is arranged concentrically about the one connecting shaft of the four-shaft epicyclic gearing (10).

41. Drive system as claimed in one of Claims 1 to 40, **characterized in that** the second electric motor (EM2) is designed as a hollow shaft motor and is arranged concentrically about the output shaft of the change gear (12), the summing gear (20) is optionally replaced by flanging the hollow shaft motor directly onto the output shaft of the change gear (12).

42. Drive system according to one of Claims 1 to 41, **characterized in that** the first and the second electric motors (EM1, EM2) are arranged laterally adjacent to the four-shaft epicyclic gearing (10) and/or the change gear (12).

43. Drive system according to one of Claims 1 to 40, **characterized in that** in the change gear or reversing gear (12) a neutral position as well as two or more gears may be engaged.

44. Drive system according to one of Claims 1 to 43, **characterized in that** the change gear and/or reversing gear is designed as a four-shaft gearing consisting of two fixed links with two separate shafts and two coupling shafts and is arranged concentrically to the first four-shaft epicyclic gearing, the first shaft of the change gear and/or reversing gear being able to be connected to the output shaft of the first four-shaft epicyclic gearing, the second and third shaft of the change gear and/or reversing gear being coupled to one respective brake and the fourth shaft of the change gear and/or reversing gear being coupled to at least one driven wheel of the industrial truck.

45. Drive system according to one of Claims 1 to 43, **characterized in that** in a change gear and/or reversing gear as a four-shaft epicyclic gearing consisting of two fixed links, the brakes are arranged on the two separate shafts.

46. Drive system according to one of Claims 1 to 43, **characterized in that** in a change gear and/or reversing gear as a four-shaft epicyclic gearing consisting of two fixed links, the brakes are arranged on the two coupling shafts.

47. Drive system according to one of Claims 1 to 43, **characterized in that** in a change gear and/or reversing gear as a four-shaft epicyclic gearing consisting of two fixed links, one brake is arranged on a coupling shaft, the other brake is arranged on a separate shaft.

48. Drive system according to one of Claims 1 to 43, **characterized in that** the change gear and/or reversing gear is designed as a three-shaft epicyclic gearing, the first shaft of the change gear and/or reversing gear being able to be connected to the output shaft of the four-shaft epicyclic gearing, the second shaft of the change gear and/or reversing gear being coupled to at least one driven wheel of the industrial truck, the third shaft of the change gear and/or reversing gear being able to be arrested by means of a brake and two shafts of the change gear and/or reversing gear being able to be connected to one another by means of a clutch.

49. Drive system according to one of Claims 1 to 43, **characterized in that** the change gear and/or reversing gear is designed as an auxiliary gear, the input shaft of the change gear and/or reversing gear being able to be connected to the output shaft of the four-shaft epicyclic gearing, and the output shaft of the change gear and/or reversing gear being coupled to at least one driven wheel of the industrial truck.

50. Drive system according to one of Claims 1 to 47, **characterized in that** the onboard power supply is provided with an electrical accumulator and a vehicle brake control (13) in the case of a low set braking force, leaves and/or shifts the change gear and/or reversing gear (12) in the neutral position and controls the second electric motor (EM2) such that the braking torque is only applied by the second electric motor (EM2) by braking produced by the generator and the current produced in the manner of a generator is used to charge the electrical accumulator.

51. Drive system according to one of Claims 1 to 49, **characterized in that** the onboard power supply is provided with an electrical accumulator and a vehicle brake control (13) in the case of a high set braking force leaves and/or shifts the change gear and/or reversing gear (12) into the shift position belonging to the respective direction of travel/vehicle speed and controls the second electric motor (EM2) such that the permissible braking torque generated by the generator is applied and the current produced in the manner of a generator is used to charge the electrical accumulator, controls the internal combustion engine (VKM) in driven mode and controls the first electric motor (EM1) such that the speed of the internal combustion engine (VKM) connected via the four-shaft epicyclic gearing (10) adopts specific, predetermined values and the current produced in the manner of a generator is used to charge the electrical accumulator.

52. Drive system according to one of Claims 1 to 50, **characterized in that** the vehicle brake control (13) leaves and/or shifts the change gear and/or reversing gear (12) in the neutral position, as soon as falling below a predetermined vehicle speed and controls the second electric motor (EM2) such that the braking torque is only applied by the second electric motor (EM2) by braking produced by the generator, the vehicle brake control (13) actuates (i.e. closes) the brake (14) coupled to the four-shaft epicyclic gearing and which controls the first electric motor (EM1) such that the internal combustion engine (VKM) connected to the four-shaft epicyclic gearing (10) is accelerated, until the speed of the internal combustion engine (VKM) adopts specific predetermined values, the current produced by the second electric motor (EM2) in the manner of a generator being at least partially consumed.

53. Drive system according to one of Claims 1 to 50, **characterized in that** a vehicle brake control (13) controls the throttle of the hydraulic pump such that when exceeding predetermined values for the speed of the internal combustion engine (VKM), an additional braking torque is produced.

54. Drive system according to one of Claims 1 to 52, **characterized in that** a vehicle brake control (13) is provided which controls a throttle (15) of the at least one hydraulic pump (consumer P2), such that an additional braking torque is produced when the deviation of the braking deceleration of the vehicle from the set value exceeds a predetermined value.

55. Drive system according to one of Claims 1 to 53, **characterized in that** a vehicle brake control (13) controls a brake (17) on the wheel side, such that it generates an additional braking torque when exceeding the predetermined values for the speed of the internal combustion engine (VKM).

56. Drive system according to one of Claims 1 to 53, **characterized in that** a vehicle brake control (13) controls at least one brake (17) on the wheel side such that an additional braking torque is produced, when the deviation of the braking deceleration of the vehicle from the set value exceeds a predetermined value.

57. Drive system according to one of Claims 1 to 55, **characterized in that** by actuating the brake (14) on the four-shaft epicyclic gearing (10) and disengaging the change gear (12), the power of the internal combustion engine (VKM) is transferred to the first electric motor (EM1) and said electric motor operates as a generator, the current produced in this manner being used for charging the battery for electrical consumers of the vehicle, external electrical consumers or as drive current for the second electric motor (EM2).

58. Drive system according to one of Claims 1 to 56, **characterized in that** the brake (14) on the four-shaft epicyclic gearing is released and the change gear and/or reversing gear (12) is shifted into the shift position belonging to the respective direction of travel and the power of the internal combustion engine (VKM) is partly transferred mechanically from the shaft of the four-shaft epicyclic gearing (10), coupled to the change gear (12), to the summing gear (20), partly electrically by an electric motor (EM2) via the onboard power supply to the other electric motor and from said electric motor to the summing gear (20).

59. Drive system according to one of Claims 1 to 56, **characterized in that** in a specific operating range, for example at high tensile force and low driving speed the brake (14) on the four-shaft epicyclic gearing (10) is actuated and the change gear and/or reversing gear (12) is left and/or shifted into the shift position belonging to the respective direction of travel and the power of the internal combustion engine (VKM) is mechanically transferred directly to the drive wheel (22, 24), both electric motors (EM1, EM2) being linked by a predetermined ratio with the vehicle speed.

60. Drive system according to Claim 58, **characterized in that** the brake on the four-shaft epicyclic gearing (10) is actuated at the point of the zero crossing speed of the shaft to which the brake (14) is connected.

61. Drive system according to Claim 57 and 58, **characterized in that** the transition from series mode to power split mode takes place by the brake (14) remaining actuated on the four-shaft epicyclic gearing (10), the change gear and/or reversing gear (12) being shifted at the point of synchronous drive and output speed into the shift position belonging to the respective direction of travel, the power of the internal combustion engine (VKM) and the electric motors (EM1, EM2) being adjusted to the load status in power split mode and then the brake (14) on the four-shaft epicyclic gearing (10) is released.

62. Drive system according to one of Claims 1 to 59, **characterized in that** the transition from power split mode to series mode takes place by the brake (14) on the four-shaft epicyclic gearing (10) being actuated, at the point of the zero crossing speed of the shaft to which the brake (14) is connected, the power of the internal combustion engine (VKM) and the electric motors (EM1, EM2) being adjusted to the load status in series mode and then the change gear and/or reversing gear (12) being shifted into the neutral position.

63. Drive system according to Claim 56 and 57, **characterized in that** the transition from series mode to power split mode takes place by the second electric motor (EM2) being adjusted such that it fully applies the output torque, the drive current being taken from an electrical accumulator, then the brake (14) on the four-shaft epicyclic gearing (10) being released, the speed of the internal combustion engine (VKM) and the first electric motor (EM1) being regulated such that the change gear and/or reversing gear (12) reach the point of synchronous drive and output speed, after which the shift position belonging to the respective direction of travel is engaged and the internal combustion engine (VKM) and the two electric motors (EM1, EM2) are adjusted to the load status in power split mode.

64. Drive system according to one of Claims 1 to 63, **characterized in that** by actuating the brake (14) on the four-shaft epicyclic gearing (10) and disengaging the change gear (12), the power of the internal combustion engine (VKM)is transferred to the consumer (P1) for the additional functions of the vehicle, and which is coupled to the shaft of the first electric motor (EM1).

65. Drive system according to one of the preceding claims, **characterized in that** by actuating the brake (14) on the four-shaft epicyclic gearing (10) and disengaging the change gear (12), the power of the first electric motor (EM1) is transferred to the internal combustion engine (VKM) and said internal combustion engine is started.

66. Drive system according to one of Claims 1 to 55, **characterized in that** the power of the first electric motor (EM1) is transferred to the consumer (P1) for the additional functions of the vehicle and which is coupled to the shaft of the first electric motor, the electrical power being taken from an electrical accumulator, the brake (14) on the four-shaft epicyclic gearing (10) being released and the change gear (12) being disengaged.

67. Drive system according to one of Claims 1 to 55, **characterized in that** the power of the consumer (P1) for the additional function of the vehicle which is coupled to the shaft of the first electric motor (EM1), is transferred to the first electric motor and said electric motor (EM1) produces current in the manner of a generator, which is supplied to the electrical accumulator, the brake (14) on the four-shaft epicyclic gearing (10) being released and the change gear (12) being disengaged.

68. Drive system according to one of Claims 1 to 55, **characterized in that** the second electric motor (EM2) fully applies the output torque, the drive current being taken from an electrical accumulator and the change gear (12) being disengaged.

69. Drive system according to one of the preceding claims, **characterized in that** the internal combustion engine (VKM) is started during travel, by the second electric motor (EM2) fully applying the output torque, the drive current being taken from the electrical accumulator and the change gear (12) being shifted into the shift position belonging to the respective direction of travel and the first electric motor (EM1) being activated such that the torque required for starting is applied to the internal combustion engine (VKM), the brake (14) on the four-shaft epicyclic gearing (10) being disengaged.

70. Drive system according to one of the preceding claims, **characterized in that** the internal combustion engine (VKM) is started during travel, by the second electric motor (EM2) fully applying the output torque, the drive current being taken from the electrical accumulator and the brake (14) on the four-shaft epicyclic gearing (10) being actuated and the change gear (12) being shifted into the shift position belonging to the respective direction of travel, the first electric motor (EM1) being activated such that the torque required for starting is applied to the internal combustion engine (VKM).

## Revendications

1. Système d'entrainement pour un chariot de manutention, doté de
• un moteur à combustion interne (VKM),
• un engrenage planétaire (10), qui est raccordable à l'arbre du moteur à combustion interne (VKM) par un premier arbre,
• un premier moteur électrique (EM1), qui est accouplé de façon mécanique à un deuxième arbre de l'engrenage planétaire (10) et électriquement connecté à un câblage de bord du véhicule,
• un correcteur de rapport (12), accouplé à un arbre de l'engrenage planétaire (10),
• un engrenage additif (20) accouplé au correcteur de rapport (12), dont l'autre arbre d'entrée est raccordé à un deuxième moteur électrique (EM2) électriquement connecté au câblage de bord, et dont l'arbre de sortie est accouplé à au moins une roue entrainée (22, 24) du chariot de manutention,
• au moins un consommateur (P1) pour au moins une fonction supplémentaire du véhicule et qui est accouplé à un des arbres de l'engrenage planétaire (10),
• un dispositif capteur qui détecte la vitesse de rotation du moteur à combustion interne (VKM) et du premier et deuxième moteur électrique (EM1, EM2) et génère des signaux correspondants, et
• un dispositif de commande et de réglage (11), qui commande ou règle les vitesses de rotation et/ou couples des moteurs électriques (EM1, EM2) et du moteur à combustion interne (VKM), conformément aux signaux de consigne des générateurs de consigne actionnés par l'opérateur du chariot de manutention et en se référant aux signaux de sortie du dispositif capteur, commute entre l'opération des moteurs électriques (EM1, EM2) comme moteur ou comme générateur et commande l'actionnement du correcteur de rapport (12),
• **caractérisé en ce que** un engrenage planétaire (10) à 4 arbres et deux ou un porte-satellites est prévu, le quatrième arbre de l'engrenage planétaire à 4 arbres (10) est accouplé à un frein (14) et que le dispositif de commande et de réglage (11) commande le frein (14).

2. Système d'entrainement selon la revendication 1, **caractérisé en ce que** la roue entrainée (22, 24) et le moteur à combustion interne (VKM) sont invertis relatif à leur position par rapport à l'ensemble d'engrenages.

3. Système d'entrainement selon la revendication 1 ou 2, **caractérisé en ce que** le correcteur de rapport (12) est un engrenage de reversement.

4. Système d'entrainement selon l'une quelconque des revendications 1 à 3, **caractérisé en ce que** le deuxième moteur électrique est formé par deux moteurs électriques câblés en parallèle, chacun d'eux étant raccordé à une roue entrainée.

5. Système d'entrainement selon l'une quelconque des revendications 1 à 4, **caractérisé en ce que** le consommateur (P1) pour la fonction supplémentaire du véhicule est accouplé à l'arbre du premier moteur électrique (EM1).

6. Système d'entrainement selon l'une quelconque des revendications 1 à 5, **caractérisé en ce que** au moins un autre consommateur (P2) pour une fonction supplémentaire du véhicule est prévu, qui est disposé au côté roue de l'engrenage correcteur de rapport ou de reversement ou du deuxième moteur électrique (EM2).

7. Système d'entrainement selon la revendication 1 ou 6, **caractérisé en ce que** le consommateur (P1, P2) pour la fonction supplémentaire du véhicule est une pompe hydraulique.

8. Système d'entrainement selon la revendication 7, **caractérisé en ce que** au moins une pompe hydraulique à arbre creux est prévue et est disposée de façon concentrique à un arbre d'un train d'engrenages.

9. Système d'entrainement selon la revendication 7 ou 8, **caractérisé en ce que** au moins une pompe hydraulique agissant en les deux sens de rotation est prévue.

10. Système d'entrainement selon l'une quelconque des revendications 7 à 9, **caractérisé en ce que** un étrangleur commandable (15) est associé à au moins une pompe hydraulique

11. Système d'entrainement selon l'une quelconque des revendications 1 à 10, **caractérisé en ce que** au moins un frein (17) est disposé au côté roue de l'engrenage correcteur de rapport ou de reversement (12) ou du deuxième moteur électrique (EM2).

12. Système d'entrainement selon l'une quelconque des revendications 1 à 11, **caractérisé en ce que** le frein (14) est un frein électromagnétique, frein à disque ou frein à lamelles.

13. Système d'entrainement selon l'une quelconque des revendications 1 à 12, **caractérisé en ce que** un dispositif capteur détecte les températures du moteur à combustion interne (VKM), et/ou du premier et du deuxième moteur électrique (EM1, EM2) et/ou du dispositif de commande et de réglage (11) et/ou de l'accumulateur électrique et/ou du moyen hydraulique, et génère des signaux de température correspondants, et que le dispositif de commande et de réglage (11) commande la puissance du moteur à combustion interne (VKM) et des moteurs électriques (EM1, EM2) conformément aux signaux de sortie du dispositif capteur, de la sorte que des valeurs données pour les température d'opération ne sont pas surmontées.

14. Système d'entrainement selon l'une quelconque des revendications 1 à 13, **caractérisé en ce que** chez un engrenage à 4 arbres et deux porte-satellites avec deux arbres célibataires et deux arbres d'accouplement, le premier arbre d'accouplement est formé par les arbres des porte-satellites des deux trains planétaires, et le deuxième arbre d'accouplement par les arbres de couronne des deux trains planétaires.

15. Système d'entrainement selon l'une quelconque des revendications 1 à 12, **caractérisé en ce que** chez un engrenage à 4 arbres et deux porte-satellites avec deux arbres célibataires et deux arbres d'accouplement, le premier arbre d'accouplement est formé par l'arbre porte-satellites de l'un et l'arbre de couronne de l'autre engrenage planétaire, et que le deuxième arbre d'accouplement est formé par l'arbre de couronne de l'un et l'arbre porte-satellites de l'autre engrenage planétaire.

16. Système d'entrainement selon l'une quelconque des revendications 1 à 13, **caractérisé en ce que** chez un engrenage à 4 arbres et deux porte-satellites avec deux arbres célibataires et deux arbres d'accouplement, le premier arbre d'accouplement est formé par les arbres porte-satellites des deux trains planétaires, et le deuxième arbre d'accouplement est formé par l'arbre de roue solaire de l'un engrenage planétaire et l'a rbre de couronne de l'autre engrenage planétaire.

17. Système d'entrainement selon l'une quelconque des revendications 1 à 13, **caractérisé en ce que** chez un engrenage à 4 arbres et deux porte-satellites avec deux arbres célibataires et deux arbres d'accouplement, le premier arbre d'accouplement est formé par l'arbre porte-satellites de l'un et l'arbre de roue solaire de l'autre engrenage planétaire, et le deuxième arbre d'accouplement est formé par l'arbre de couronne de l'un et l'arbre porte-satellites de l'autre engrenage planétaire.

18. Système d'entrainement selon l'une quelconque des revendications 1 à 13, **caractérisé en ce que** chez un engrenage à 4 arbres et deux porte-satellites avec deux arbres célibataires et deux arbres d'accouplement, le premier arbre d'accouplement est formé par les arbres de couronne des deux trains planétaires, et le deuxième arbre d'accouplement est formé par l'arbre de roue solaire de l'un et l'arbre porte-satellites de l'autre engrenage planétaire.

19. Système d'entrainement selon l'une quelconque des revendications 1 à 13, **caractérisé en ce que** chez un engrenage à 4 arbres et deux porte-satellites avec deux arbres célibataires et deux arbres d'accouplement, le premier arbre d'accouplement est formé par l'arbre porte-satellites de l'un et l'arbre de couronne de l'autre engrenage planétaire, et le deuxième arbre d'accouplement est formé par l'arbre de couronne de l'un et l'arbre de roue solaire de l'autre engrenage planétaire.

20. Système d'entrainement selon l'une quelconque des revendications 1 à 13, **caractérisé en ce que** chez un engrenage à 4 arbres et deux porte-satellites avec deux arbres célibataires et deux arbres d'accouplement, le premier arbre d'accouplement est formé par les arbres porte-satellites des deux trains planétaires, et le deuxième arbre d'accouplement est formé par les arbres de roue solaire des deux trains planétaires.

21. Système d'entrainement selon l'une quelconque des revendications 1 à 13, **caractérisé en ce que** chez un engrenage à 4 arbres et deux porte-satellites avec deux arbres célibataires et deux arbres d'accouplement, le premier arbre d'accouplement est formé par l'arbre porte-satellites de l'un et l'arbre de roue solaire de l'autre engrenage planétaire, et le deuxième arbre d'accouplement est formé par l'arbre de roue solaire de l'un et l'arbre porte-satellites de l'autre engrenage planétaire.

22. Système d'entrainement selon l'une quelconque des revendications 1 à 13, **caractérisé en ce que** chez un engrenage à 4 arbres et deux porte-satellites avec deux arbres célibataires et deux arbres d'accouplement, le premier arbre d'accouplement est formé par l' arbre porte-satellites de l'un et par l'arbre de roue solaire de l'autre engrenage planétaire, et le deuxième arbre d'accouplement est formé par l'arbre de roue solaire de l'un et l'arbre de couronne de l'autre engrenage planétaire.

23. Système d'entrainement selon l'une quelconque des revendications 1 à 13, **caractérisé en ce que** chez un engrenage à 4 arbres et deux porte-satellites avec deux arbres célibataires et deux arbres d'accouplement, le premier arbre d'accouplement est formé par l'arbre porte-satellites de l'un et l'arbre de couronne de l'autre engrenage planétaire, et le deuxième arbre d'accouplement est formé par les arbres de roue solaire des deux trains planétaires.

24. Système d'entrainement selon l'une quelconque des revendications 1 à 13, **caractérisé en ce que** chez un engrenage à 4 arbres et deux porte-satellites avec deux arbres célibataires et deux arbres d'accouplement, le premier arbre d'accouplement est formé par les arbres de couronne des deux trains planétaires, et le deuxième arbre d'accouplement est formé par les arbres de roue solaire des deux trains planétaires.

25. Système d'entrainement selon l'une quelconque des revendications 1 à 13, **caractérisé en ce que** chez un engrenage à 4 arbres et deux porte-satellites avec deux arbres célibataires et deux arbres d'accouplement, le premier arbre d'accouplement est formé par l'arbre de roue solaire de l'un et l'arbre de couronne de l'autre engrenage planétaire, et le deuxième arbre d'accouplement est formé par l'arbre de couronne de l'un et l'arbre de roue solaire de l'autre engrenage planétaire.

26. Système d'entrainement selon l'une quelconque des revendications 1 à 24, **caractérisé en ce que** chez un engrenage épicycloïdal à 4 arbres et deux porte-satellites, le moteur à combustion interne est raccordé à l'un arbre d'accouplement, le premier moteur électrique à l'autre arbre d'accouplement, et le frein ainsi que le correcteur de rapport aux deux arbres célibataires.

27. Système d'entrainement selon l'une quelconque des revendications 1 à 25, **caractérisé en ce que** chez un engrenage épicycloïdal à 4 arbres et deux porte-satellites, le frein est raccordé à l'un arbre d'accouplement, le premier moteur électrique à l'autre arbre d'accouplement, et le moteur à combustion interne ainsi que le correcteur de rapport aux deux arbres célibataires.

28. Système d'entrainement selon l'une quelconque des revendications 1 à 25, **caractérisé en ce que** chez un engrenage épicycloïdal à 4 arbres et deux porte-satellites, le moteur à combustion interne est raccordé à l'un arbre d'accouplement, le frein à l'autre arbre d'accouplement, et le premier moteur électrique ainsi que le correcteur de rapport aux deux arbres célibataires.

29. Système d'entrainement selon l'une quelconque des revendications 1 à 25, **caractérisé en ce que** chez un engrenage épicycloïdal à 4 arbres et deux porte-satellites, le premier moteur électrique est raccordé à l'un arbre d'accouplement, le correcteur de rapport à l'autre arbre d'accouplement, et le frein ainsi que le moteur à combustion interne aux deux arbres célibataires.

30. Système d'entrainement selon l'une quelconque des revendications 1 à 25, **caractérisé en ce que** chez un engrenage épicycloïdal à 4 arbres et deux porte-satellites, le moteur à combustion interne est raccordé à l'un arbre d'accouplement, le correcteur de rapport à l'autre arbre d'accouplement, et le frein ainsi que le premier moteur électrique deux arbres célibataires.

31. Système d'entrainement selon l'une quelconque des revendications 1 à 25, **caractérisé en ce que** chez un engrenage épicycloïdal à 4 arbres et deux porte-satellites, le frein est raccordé à l'un arbre d'accouplement, le correcteur de rapport à l'autre arbre d'accouplement, et le moteur à combustion interne ainsi que le premier moteur électrique aux deux arbres célibataires.

32. Système d'entrainement selon l'une quelconque des revendications 1 à 29, **caractérisé en ce que** chez un engrenage épicycloïdal à 4 arbres et deux porte-satellites, les planètes d'un étage sont formés comme réducteurs planétaires à étages, et des roues solaires sont prévues au lieu des couronnes.

33. Système d'entrainement selon l'une quelconque des revendications 1 à 13, **caractérisé en ce que** chez un engrenage épicycloïdal à 4 arbres et un porte-satellites, le porte-satellites est pourvu de réducteurs planétaires à trois étages, chaque réducteur planétaire de chaque étage étant engagé à une roue solaire ou de couronne et que le porte-satellites ainsi que les trois roues dentées engrenantes avec les planètes sont chacun raccordé à un arbre de raccordement.

34. Système d'entrainement selon l'une quelconque des revendications 1 à 13, **caractérisé en ce que** chez un engrenage épicycloïdal à 4 arbres et un porte-satellites, le porte-satellites est pourvu de réducteurs planétaires à deux étages, une roue solaire et une couronne engrenantes avec les planètes de l'un étage et une roue solaire ou une couronne avec les planètes de l'autre étage, et que le porte-satellites ainsi que les trois roues dentées engrenantes avec les planètes sont chacun raccordé à un arbre de raccordement.

35. Système d'entrainement selon l'une quelconque des revendications 32 à 34, **caractérisé en ce que** chez un engrenage épicycloïdal à 4 arbres, il y a au moins une autre roue solaire ou couronne reliée à un deuxième frein.

36. Système d'entrainement selon l'une quelconque des revendications 1 à 12 ou 32 ou 33, **caractérisé en ce que** chez un engrenage épicycloïdal à 4 arbres et un porte-satellites, le moteur à combustion interne est raccordé à l'arbre du porte-satellites, le premier moteur électrique, le frein ainsi que le correcteur de rapport chacun à un arbre de raccordement.

37. Système d'entrainement selon l'une quelconque des revendications 1 à 13 ou 32 ou 33, **caractérisé en ce que** chez un engrenage épicycloïdal à 4 arbres et un porte-satellites, le premier moteur électrique est raccordé à l'arbre du porte-planètes, le moteur à combustion interne, le frein ainsi que le correcteur de rapport chacun à un arbre de raccordement.

38. Système d'entrainement selon l'une quelconque des revendications 1 à 13 ou 32 ou 33, **caractérisé en ce que** chez un engrenage épicycloïdal à 4 arbres et un porte-satellites, le frein est raccordé à l'arbre du porte-planètes, le premier moteur électrique, le moteur à combustion interne ainsi que le correcteur de rapport chacun à un arbre de raccordement.

39. Système d'entrainement selon l'une quelconque des revendications 1 à 13 ou 32 ou 33, **caractérisé en ce que** chez un engrenage épicycloïdal à 4 arbres et un porte-satellites, le correcteur de rapport est raccordé à l'arbre du porte-planètes, le premier moteur électrique, le frein ainsi que le moteur à combustion interne chacun à un arbre de raccordement.

40. Système d'entrainement selon l'une quelconque des revendications 1 à 39, **caractérisé en ce que** le premier moteur électrique (EM1) est fait comme un moteur à arbre creux et disposé de façon concentrique autour de l'un arbre de raccordement de l'engrenage épicycloïdal à 4 arbres (10).

41. Système d'entrainement selon l'une quelconque des revendications 1 à 40, **caractérisé en ce que** le deuxième moteur électrique (EM2) est fait comme un moteur à arbre creux et disposé de façon concentrique autour de l'arbre de sortie du correcteur de rapport (12), l'engrenage additif (20) étant, le cas échéant, substitué par un bridage direct du moteur à arbre creux à l'arbre de sortie du correcteur de rapport (12).

42. Système d'entrainement selon l'une quelconque des revendications 1 à 41, **caractérisé en ce que** les moteurs électriques premier et deuxième (EM1, EM2) sont disposés latéralement à côté de l'engrenage épicycloïdal à 4 arbres (10) ou respectivement du correcteur de rapport (12).

43. Système d'entrainement selon l'une quelconque des revendications 1 à 40, **caractérisé en ce que** chez l'engrenage correcteur de rapport ou inverseur de marche (12), une position neutre ainsi que deux ou plus vitesses se laissent commuter.

44. Système d'entrainement selon l'une quelconque des revendications 1 à 43, **caractérisé en ce que** l'engrenage correcteur de rapport ou inverseur de marche est fait comme un engrenage à 4 arbres et deux porte-satellites avec deux arbres célibataires et deux arbres d'accouplement et est disposé de façon concentrique au premier engrenage épicycloïdal à 4 arbres, le premier arbre de l'engrenage correcteur de rapport ou inverseur de marche se laissant raccorder à l'arbre de sortie du premier engrenage épicycloïdal à 4 arbres, les arbres deuxième et troisième de l'engrenage correcteur de rapport ou inverseur de marche chacun étant accouplé à un frein et le quatrième arbre de l'engrenage correcteur de rapport ou inverseur de marche étant accouplé à au moins une roue entraînée du chariot de manutention.

45. Système d'entrainement selon l'une quelconque des revendications 1 à 43, **caractérisé en ce que** chez un engrenage correcteur de rapport ou inverseur de marche réalisé comme engrenage épicycloïdal à 4 arbres et deux porte-satellites, les freins sont disposés dans les deux arbres célibataires.

46. Système d'entrainement selon l'une quelconque des revendications 1 à 43, **caractérisé en ce que** chez un engrenage correcteur de rapport ou inverseur de marche réalisé comme engrenage épicycloïdal à 4 arbres et deux porte-satellites, les freins sont disposés dans les deux arbres d'accouplement.

47. Système d'entrainement selon l'une quelconque des revendications 1 à 43, **caractérisé en ce que** chez un engrenage correcteur de rapport ou inverseur de marche réalisé comme engrenage épicycloïdal à 4 arbres et deux porte-satellites, un frein est disposé dans un arbre d'accouplement, l'autre frein dans un arbre célibataire.

48. Système d'entrainement selon l'une quelconque des revendications 1 à 43, **caractérisé en ce que** l'engrenage correcteur de rapport ou inverseur de marche est réalisé comme engrenage épicycloïdal à 3 arbres, le premier arbre de l'engrenage correcteur de rapport ou inverseur de marche se laissant raccorder à l'arbre de sortie de l'engrenage épicycloïdal à 4 arbres, le deuxième arbre de l'engrenage correcteur de rapport ou inverseur de marche étant accouplé à au moins une roue entraînée du chariot de manutention, le troisième arbre de l'engrenage correcteur de rapport ou inverseur de marche étant bloquable par un frein et deux arbres de l'engrenage correcteur de rapport ou inverseur de marche étant connectable l'un à l'autre au moyen d'un embrayage.

49. Système d'entrainement selon l'une quelconque des revendications 1 à 43, **caractérisé en ce que** l'engrenage correcteur de rapport ou inverseur de marche est réalisé comme engrenage intermédiaire, l'arbre d'entrée de l'engrenage correcteur de rapport ou inverseur de marche étant connectable à l'arbre de sortie de l'engrenage épicycloïdal à 4 arbres et l'arbre de sortie de l'engrenage correcteur de rapport ou inverseur de marche étant accouplé à au moins une roue entraînée du chariot de manutention.

50. Système d'entrainement selon l'une quelconque des revendications 1 à 47, **caractérisé en ce que** le câblage de bord est pourvu d'un accumulateur électrique et que une commande de freinage de véhicule (13) laisse dans ou commute vers la position neutre l'engrenage correcteur de rapport ou inverseur de marche (12) en cas d'un petit consigne de la force de freinage, et commande le deuxième moteur électrique (EM2) de sorte que le couple de freinage est fourni seulement du deuxième moteur électrique par freinage générateur, et que le courant produit de façon génératrice est utilisé pour charger l'accumulateur électrique.

51. Système d'entrainement selon l'une quelconque des revendications 1 à 49, **caractérisé en ce que** le câblage de bord est pourvu d'un accumulateur électrique et que une commande de freinage de véhicule (13) laisse dans ou commute vers la position associée à la direction/vitesse de marche l'engrenage correcteur de rapport ou inverseur de marche (12) dans le cas d'un grand consigne de la force de freinage, et commande le deuxième moteur électrique (EM2) de sorte que le couple du freinage générateur admissible est fourni et le courant produit de façon génératrice est utilisé pour charger l'accumulateur électrique, commande le moteur à combustion interne (VKM) vers l'opération simultanée et commande le premier moteur électrique (EM1) de telle façon que la vitesse de rotation du moteur à combustion interne (VKM) raccordé via l'engrenage épicycloïdal à 4 arbres (10) prend certains valeurs prédéterminés, et le courant produit de façon génératrice est utilisé pour charger l'accumulateur électrique.

52. Système d'entrainement selon l'une quelconque des revendications 1 à 50, **caractérisé en ce que** une commande de freinage de véhicule (13) laisse dans ou commute vers la position neutre l'engrenage correcteur de rapport ou inverseur de marche (12) aussitôt que une vitesse de marche prescrite est surmontée, et commande le deuxième moteur électrique (EM2) de sorte que le couple de freinage est fourni seulement du deuxième moteur électrique (EM2) par freinage générateur, et la commande de freinage de véhicule (13) actionne (cela veut dire ferme) le frein (14) accouplé à l'engrenage épicycloïdal à 4 arbres, et commande le premier moteur électrique (EM1) de sorte que le moteur à combustion interne (VKM) raccordé à l'engrenage épicycloïdal à 4 arbres (10) est accéléré jusqu'à ce que la vitesse de rotation du moteur à combustion interne prend certains valeurs données, le courant généré du deuxième moteur électrique (EM2) étant consommé au moins partiellement en cela.

53. Système d'entrainement selon l'une quelconque des revendications 1 à 50, **caractérisé en ce que** une commande de freinage de véhicule (13) commande l'étrangleur de la pompe hydraulique de sorte que un couple de freinage additionnel est généré quand des valeurs données pour la vitesse de rotation du moteur à combustion interne (VKM) sont surmontées.

54. Système d'entrainement selon l'une quelconque des revendications 1 à 52, **caractérisé en ce que** une commande de freinage de véhicule (13) est pourvue qui commande un étrangleur (15) de l'au moins une pompe hydraulique (consommateur P2) de sorte que un couple de freinage additionnel est généré quand la déviation de la décélération de freinage du véhicule de la valeur de consigne surmonte une valeur donnée.

55. Système d'entrainement selon l'une quelconque des revendications 1 à 53, **caractérisé en ce que** une commande de freinage de véhicule (13) commande un frein (17) côté roue de sorte qu'il génère un couple de freinage additionnel quand les valeurs prescrites pour la vitesse de rotation du moteur à combustion interne (VKM) sont surmontées.

56. Système d'entrainement selon l'une quelconque des revendications 1 à 53, **caractérisé en ce que** une commande de freinage de véhicule (13) commande au moins un frein (17) côté roue de sorte que un couple de freinage additionnel est généré quand la déviation de la décélération de freinage du véhicule de la valeur de consigne surmonte une valeur donnée.

57. Système d'entrainement selon l'une quelconque des revendications 1 à 55, **caractérisé en ce que** par actionnant le frein (14) dans l'engrenage épicycloïdal à 4 arbres (10) et séparant le correcteur de rapport (12), le pouvoir du moteur à combustion interne (VKM) est transmis au premier moteur électrique (EM1), et celui-ci travaille comme un générateur, le courant généré de telle façon étant utilisé pour charger la batterie, pour des consommateurs électriques du véhicule, des consommateurs externes ou comme courant de marche pour le deuxième moteur électrique (EM2).

58. Système d'entrainement selon l'une quelconque des revendications 1 à 56, **caractérisé en ce que** le frein (14) dans l'engrenage épicycloïdal à 4 arbres est ouvert et l'engrenage correcteur de rapport ou inverseur de marche (12) est commuté vers la position de commutation associée au sens de marche correspondant, et le pouvoir du moteur à combustion interne (VKM) est partiellement transféré de façon mécanique de l'arbre de l'engrenage épicycloïdal à 4 arbres accouplé au correcteur de rapport (12) à l'engrenage additif (20) d'une part, et de l'autre part il est transféré de façon électrique d'un moteur électrique (EM2) à l'autre via le câblage de bord, et de ce dernier à l'engrenage additif (20).

59. Système d'entrainement selon l'une quelconque des revendications 1 à 56, **caractérisé en ce que** dans une certaine condition d'opération, par exemple haute force de traction et basse vitesse de marche, le frein (14) dans l'engrenage épicycloïdal à 4 arbres (10) est actionné et l'engrenage correcteur de rapport ou inverseur de marche (12) est commuté vers ou laissé dans la position de commutation associée au sens de marche correspondant, et le pouvoir du moteur à combustion interne (VKM) est transféré directement à la roue entrainée (22, 24) de façon mécanique, les deux moteurs électriques (EM1, EM2) étant accouplés à la vitesse de marche avec une transmission donnée.

60. Système d'entrainement selon la revendication 58, **caractérisé en ce que** le frein (14) dans l'engrenage épicycloïdal à 4 arbres (10) est actionné dans le point du passage par zéro de la vitesse de rotation de l'arbre auquel le frein (14) est raccordé.

61. Système d'entrainement selon la revendication 57 et 58, **caractérisé en ce que** la transition de l'opération sérielle à l'opération en branchement de couple se fait en laissant le frein (14) dans l'engrenage épicycloïdal à 4 arbres (10) actionné, l'engrenage correcteur de rapport ou inverseur de marche (12) étant commuté vers la position de commutation associée à la direction de marche correspondante sur le point des vitesses de rotation de l'entrée et de la sortie synchrones, la puissance du moteur à combustion interne (VKM) et des moteurs électriques (EM1, EM2) étant réglée vers la condition de charge dans l'opération en branchement de couple, et après cela, le frein (14) dans l'engrenage épicycloïdal à 4 arbres (10) est desserré.

62. Système d'entrainement selon l'une quelconque des revendications 1 à 59, **caractérisé en ce que** la transition de l'opération en branchement de couple à l'opération sérielle se fait en actionnant le frein (14) dans l'engrenage épicycloïdal à 4 arbres (10) dans le point du passage par zéro de la vitesse de rotation de l'arbre auquel le frein (14) est raccordé, la puissance du moteur à combustion interne (VKM) et des moteurs (EM1, EM2) est réglée vers la condition de charge dans l'opération sérielle, et après cela, l'engrenage correcteur de rapport ou inverseur de marche (12) est commuté vers la position neutre.

63. Système d'entrainement selon la revendication 56 et 57, **caractérisé en ce que** la transition de l'opération sérielle à l'opération en branchement de couple se fait en réglant le deuxième moteur électrique (EM2) de sorte qu'il fournit complètement le couple, le courant de marche étant pris d'un accumulateur électrique, puis le frein (14) dans l'engrenage épicycloïdal à 4 arbres (10) est desserré, la vitesse de rotation du moteur à combustion interne (VKM) et du premier moteur électrique est réglée de sorte que l'engrenage correcteur de rapport ou inverseur de marche (12) atteint le point de vitesses de rotation de l'entrée et de la sortie synchrones, après quoi la position de commutation associée à la direction de marche correspondante est commutée et le moteur à combustion interne (VKM) et les deux moteurs électriques (EM1, EM2) sont réglés vers la condition de charge dans l'opération en branchement de couple.

64. Système d'entrainement selon l'une quelconque des revendications 1 à 63, **caractérisé en ce que** en actionnant le frein (14) dans l'engrenage épicycloïdal à 4 arbres (10) et séparant l'engrenage correcteur de rapport (12), la puissance du moteur à combustion interne (VKM) est transmise au consommateur (P1) pour les fonctions supplémentaires du véhicule qui est accouplé à l'arbre du premier moteur électrique (EM1).

65. Système d'entrainement selon une des revendications précédentes, **caractérisé en ce que** par l'actionnement du frein (14) dans l'engrenage épicycloïdal à 4 arbres (10) et la séparation de l'engrenage correcteur de rapport (12), la puissance du premier moteur électrique (EM1) est transmise au moteur à combustion interne (VKM) et celui-ci est mis en marche.

66. Système d'entrainement selon l'une quelconque des revendications 1 à 55, **caractérisé en ce que** la puissance du premier moteur électrique (EM1) est transmise au consommateur (P1) pour les fonctions supplémentaires du véhicule qui est accouplé à l'arbre du premier moteur électrique, la puissance électrique étant prise d'un accumulateur électrique, le frein (14) dans l'engrenage épicycloïdal à 4 arbres (10) étant desserré et l'engrenage correcteur de rapport (12) étant séparé.

67. Système d'entrainement selon l'une quelconque des revendications 1 à 55, **caractérisé en ce que** la puissance du consommateur (P1) pour les fonctions supplémentaires du véhicule qui est accouplé à l'arbre du premier moteur électrique (EM1) est transmise au premier moteur électrique (EM1) et celui-ci génère du courant en fonctionnant comme générateur, qui est conduit à l'accumulateur électrique, le frein (14) dans l'engrenage épicycloïdal à 4 arbres (10) étant desserré et l'engrenage correcteur de rapport (12) étant séparé.

68. Système d'entrainement selon l'une quelconque des revendications 1 à 55, **caractérisé en ce que** le deuxième moteur électrique (EM2) fournit complètement le couple de sortie, le courant de marche étant pris d'un accumulateur électrique et l'engrenage correcteur de rapport (12) étant séparé.

69. Système d'entrainement selon une des revendications précédentes, **caractérisé en ce que** le moteur à combustion interne (VKM) est démarré pendant la marche, le deuxième moteur électrique (EM2) complètement fournissant le couple de sortie et le courant de marche étant pris de l'accumulateur électrique, et l'engrenage correcteur de rapport (12) étant commuté vers la position de commutation associée à la direction de marche correspondante et le premier moteur électrique étant commandé de sorte que le couple nécessaire pour démarrer est appliqué au moteur à combustion interne (VKM), le frein (14) dans l'engrenage épicycloïdal à 4 arbres (10) étant séparé pendant cela.

70. Système d'entrainement selon une des revendications précédentes, **caractérisé en ce que** le moteur à combustion interne (VKM) est démarré pendant la marche, le deuxième moteur électrique (EM2) complètement fournissant le couple de sortie et le courant de marche étant pris de l'accumulateur électrique, le frein (14) dans l'engrenage épicycloïdal à 4 arbres (10) étant actionné et l'engrenage correcteur de rapport (12) étant commuté vers la position de commutation associée à la direction de marche correspondante, et le premier moteur électrique (EM1) étant commandé de sorte que le couple nécessaire pour démarrer est appliqué au moteur à combustion interne (VKM).
